# EUROPEAN PATENT SPECIFICATION

(11) **EP 3 730 296 B1**
(45) Date of publication and mention of the grant of the patent: **21.10.2026**
(21) Application number: 19743463.2
(22) Date of filing: 09.01.2019
(51) Int. Cl.: B32B 1/08, B32B 7/12, B32B 27/08, B32B 27/18, B32B 27/30, B32B 27/32, B32B 27/34, F16L 11/04

(54) **LAMINATE**
LAMINAT
STRATIFIÉ

(30) Priority: 29.01.2018 JP 2018012659
(43) Date of publication of application: 28.10.2020
(73) Proprietor: DAIKIN INDUSTRIES, LTD., Osaka-Shi, Osaka 530-0001 (JP)
(72) Inventor: KUWAJIMA, Yuuki, Osaka-Shi, Osaka 530-8323 (JP); KAMIYA, Yukinori, Osaka-Shi, Osaka 530-8323 (JP); INABA, Takeshi, Osaka-Shi, Osaka 530-8323 (JP)
(74) Representative: Hoffmann Eitle
(86) International application number: PCT/JP2019/000363
(87) International publication number: WO 2019/146406

(56) References cited:
- WO-A1-2009/119747
- JP-A- 2006 168 358
- JP-A- 2010 030 276
- JP-A- 2010 179 611
- JP-A- 2010 179 611
- JP-A- 2011 020 320
- US-A- 5 763 034
- US-A1- 2007 026 177
- US-A1- 2009 252 979
- US-A1- 2013 066 010
- KURARAY CO. LTD.: "EVOH gas barrier resins & film", 2016, pages 1 - 16, XP055375679

## Description

### TECHNICAL FIELD

The invention relates to laminates.

### BACKGROUND ART

Pipes for transporting fuel such as gasoline are made of resin laminates because of their processability, anti-corrosiveness, light weight, and economic efficiency. For example, JP-A-2010-030276 proposes a laminate of a layer containing a chlorotrifluoroethylene copolymer and a layer containing a fluorine-free organic material. US2013/0066010A1 relates to a molded article for a biodiesel fuel having durability against a biodiesel fuel. The invention disclosed therein is a molded article for a biodiesel fuel of which the surface to be contacted with a biodiesel fuel is made of a fluorine-containing ethylenic resin.
US-A-2009/0252979 relates to an adhesive composition comprising at least one polyamide, with a mean number of carbon atoms per nitrogen atom, of 4-8.5; at least one polyamide with a melting point of ≥ 180° C and a mean number of 7-10 carbon atoms per nitrogen atom, at least one polyamide with a mean number of 9-18 carbon atoms per nitrogen atom; at least 50 wt.% of the composition being formed from one or more polyamides chosen from above mentioned polyamides the mass weighted mean of the heats of fusion of these polyamides in the said composition being > 25 J/g (DSC), the mean number of carbon atoms per nitrogen atom of the polyamides also satisfying a strict inequality and also to multilayer structures using the composition.

### SUMMARY OF INVENTION

### - Technical problem

However, there is a demand for improved fuel permeation resistance.

The invention aims to provide a laminate having excellent fuel permeation resistance.

### - Solution to problem

The invention relates to a laminate according to claim 1 (hereinafter also referred to as a "first laminate" of the invention) including: a fluororesin layer (A) containing a fluororesin having a fuel permeability coefficient of 2.0 g·mm/m²/day or lower; and a fluorine-free resin layer (B) containing a fluorine-free resin having a SP value of 11.5-13.5 (cal/cm³)^{1/2} and a fuel permeability coefficient of 1.0 g·mm/m²/day or lower and the remaining features of claim 1.

The fluororesin is preferably a chlorotrifluoroethylene copolymer.

The fluorine-free resin is preferably an ethylene/vinyl alcohol copolymer.

The laminate preferably further includes a resin layer (C).

The laminate also includes an adhesive layer (S).

The adhesive layer (S) contains a resin having an amine value of 10-80 (equivalents/10⁶ g).

The laminate is preferably a tube for fuel.

The invention also relates to a laminate (hereinafter also referred to as a "second laminate" of the invention) having a fuel permeability coefficient of 0.05 g·mm/m²/day or lower.

### - Advantageous Effects of Invention

The laminate of the invention includes a fluororesin layer containing a fluororesin having a specific fuel permeability coefficient and a fluorine-free resin layer containing a fluorine-free resin having a specific SP value and a specific fuel permeability coefficient. The laminate thus has excellent fuel permeation resistance.

### DESCRIPTION OF EMBODIMENTS

The first laminate of the invention includes a fluororesin layer (A) and a fluorine-free resin layer (B) and the remaining features of claim 1.

Each of the components is described below.

The fluororesin layer (A) contains a fluororesin. The fluororesin has a fuel permeability coefficient of 2.0 g·mm/m²/day or lower.

The fluororesin having a fuel permeability coefficient of 2.0 g·mm/m²/day or lower can lead to excellently low fuel permeability. Thus, the first laminate of the invention can suitably be used as a tube for fuel or a hose for fuel, for example.

The fuel permeability coefficient is preferably 1.5 g·mm/m²/day or lower, more preferably 0.8 g·mm/m²/day or lower, still more preferably 0.55 g·mm/m²/day or lower, particularly preferably 0.5 g·mm/m²/day or lower.

The fuel permeability coefficient is a value calculated from the mass change determined as follows. Specifically, a SUS316 fuel permeability coefficient measurement cup having an inner diameter of 40 mmø and a height of 20 mm is charged with 18 mL of an isooctane-toluene-ethanol solvent mixture in which isooctane, toluene, and ethanol are mixed at a ratio by volume of 45:45:10; a fluororesin sheet (diameter: 45 mm, thickness: 120 µm) is prepared from the measurement target resin by the following method and is put into the measurement cup; and then the mass change is determined at 60°C.

### (Method for producing fluororesin sheet)

Resin pellets were put into a mold having a diameter of 120 mm. The workpiece was mounted on a press heated up to 300°C and the pellets were melt-pressed at a pressure of about 2.9 MPa, whereby a fluororesin sheet having a thickness of 0.12 mm was obtained. This sheet was then processed to have a diameter of 45 mm and a thickness of 120 µm.

In order to provide a laminate having excellently low fuel permeability, the fluororesin is preferably at least one selected from the group consisting of polychlorotrifluoroethylene (PCTFE), a chlorotrifluoroethylene (CTFE) copolymer, and a tetrafluoroethylene (TFE)/hexafluoropropylene (HFP) copolymer containing an adhesive functional group, and a TFE/HFP/vinylidene fluoride (VdF) copolymer. In order to achieve flexibility, the fluororesin is more preferably at least one selected from the group consisting of a CTFE copolymer, a TFE/HFP copolymer containing an adhesive functional group, and a TFE/HFP/VdF copolymer. In order to achieve low fuel permeability, a CTFE copolymer is still more preferred.

A lower VdF content leads to lower fuel permeability. Thus, the TFE/HFP/VdF copolymer preferably satisfies a TFE/HFP/VdF copolymerization ratio (ratio by mol%) of (75-95)/(0.1-10)/(0.1-19), more preferably (77-95)/(1-8)/(1-17) (ratio by mole), still more preferably (77-95)/(2-8)/(2-16.5) (ratio by mole), most preferably (77-90)/(3-8)/(5-16) (ratio by mole). The TFE/HFP/VdF copolymer may contain 0-20 mol% of a different monomer. The different monomer may be at least one monomer selected from the group consisting of fluorine-containing monomers such as perfluoro(methyl vinyl ether), perfluoro(ethyl vinyl ether), perfluoro(propyl vinyl ether), chlorotrifluoroethylene, 2-chloropentafluoropropene, perfluorinated vinyl ether (e.g., perfluoroalkoxy vinyl ethers such as CF₃OCF₂CF₂CF₂OCF=CF₂), perfluoroalkyl vinyl ether, perfluoro-1,3-butadiene, trifluoroethylene, hexafluoroisobutene, vinyl fluoride, ethylene, propylene, alkyl vinyl ether, BTFB (H₂C=CH-CF₂-CF₂-Br), BDFE (F₂C=CHBr), and BTFE(F₂C-CFBr). Preferred are perfluoro(methyl vinyl ether), perfluoro(ethyl vinyl ether), perfluoro (propyl vinyl ether), BTFB (H₂C=CH-CF₂-CF₂-Br), BDFE (F₂C=CHBr), and BTFE (F₂C-CFBr).

The PCTFE is a homopolymer of chlorotrifluoroethylene.

The CTFE copolymer preferably contains a copolymerized unit (CTFE unit) derived from CTFE and a copolymerized unit derived from at least one monomer selected from the group consisting of TFE, HFP, perfluoro(alkyl vinyl ether) (PAVE), VdF, vinyl fluoride, hexafluoroisobutene, monomers represented by the following formula:

CH₂=CX¹(CF₂)ₙX²

(wherein X¹ is H or F; X² is H, F, or Cl; and n is an integer of 1-10), ethylene, propylene, 1-butene, 2-butene, vinyl chloride, and vinylidene chloride.

The CTFE copolymer is more preferably a perhalopolymer.

The CTFE copolymer more preferably contains a CTFE unit and a copolymerized unit derived from at least one monomer selected from the group consisting of TFE, HFP, and PAVE, still more preferably consists essentially of these copolymerized units. In order to achieve low fuel permeability, the CTFE copolymer is preferably free from a monomer containing a CH bond, such as ethylene, vinylidene fluoride, and vinyl fluoride.

The CTFE copolymer preferably contains a CTFE unit in an amount of 10-90 mol% of all monomer units.

The CTFE copolymer particularly preferably contains a CTFE unit, a TFE unit, and a monomer (α) unit derived from a monomer (α) copolymerizable therewith.

The "CTFE unit" and the "TFE unit" are respectively a moiety (-CFCl-CF₂-) derived from CTFE and a moiety (-CF₂-CF₂-) derived from TFE in the molecular structure of the CTFE copolymer. The "monomer (α) unit" is similarly a moiety formed by addition of a monomer (α) in the molecular structure of the CTFE copolymer.

The monomer (α) may be any monomer copolymerizable with CTFE and TFE. Examples thereof include ethylene (Et), vinylidene fluoride (VdF), PAVE represented by CF₂=CF-ORf¹ (wherein Rf¹ is a C1-C8 perfluoroalkyl group), vinyl monomers represented by CX³X⁴=CX⁵(CF₂)ₙX⁶ (wherein X³, X⁴, and X⁵ are the same as or different from each other, and are each a hydrogen atom or a fluorine atom; X⁶ is a hydrogen atom, a fluorine atom, or a chlorine atom; and n is an integer of 1-10), and alkyl perfluorovinyl ether derivatives represented by CF₂=CF-O-Rf² (wherein Rf² is a C1-C5 perfluoroalkyl group).

Preferred among the alkyl perfluorovinyl ether derivatives are those in which Rf² is a C1-C3 perfluoroalkyl group, and more preferred is CF₂=CF-OCF₂-CF₂CF₃.

The monomer (α) is preferably at least one selected from the group consisting of PAVE, the vinyl monomers, and the alkyl perfluorovinyl ether derivatives, more preferably at least one selected from the group consisting of PAVE and HFP, particularly preferably PAVE.

For the ratio of the CTFE unit and the TFE unit in the CTFE copolymer, the CTFE unit represents 15-90 mol% and the TFE unit represents 85-10 mol%, more preferably the CTFE unit represents 20-90 mol% and the TFE unit represents 80-10 mol%. Also preferred is a structure in which the CTFE unit represents 15-25 mol% and the TFE unit represents 85-75 mol%.

The CTFE copolymer preferably satisfies that the CTFE unit and the TFE unit represent 90-99.9 mol% in total and the monomer (α) unit represents 0.1-10 mol%. Less than 0.1 mol% of the monomer (α) unit may cause poor moldability, environmental stress cracking resistance, and fuel crack resistance. More than 10 mol% thereof tends to cause insufficiently low fuel permeability, poor heat resistance, and poor mechanical properties.

In order to achieve low fuel permeability and good adhesion, the fluororesin is more preferably at least one selected from the group consisting of PCTFE, a CTFE/TFE/PAVE copolymer, and a TFE/HFP/VdF copolymer, still more preferably at least one selected from the group consisting of a CTFE/TFE/PAVE copolymer and a TFE/HFP/VdF copolymer, particularly preferably a CTFE/TFE/PAVE copolymer.

The CTFE/TFE/PAVE copolymer is a copolymer consisting essentially of CTFE, TFE, and PAVE.

Examples of the PAVE in the CTFE/TFE/PAVE copolymer include perfluoro(methyl vinyl ether) (PMVE), perfluoro(ethyl vinyl ether) (PEVE), perfluoro(propyl vinyl ether) (PPVE), and perfluoro (butyl vinyl ether). Preferred among these is at least one selected from the group consisting of PMVE, PEVE, and PPVE.

In the CTFE/TFE/PAVE copolymer, the PAVE unit preferably represents 0.5 mol% or more and 5 mol% or less of all monomer units.

The constituent units such as a CTFE unit are values obtainable by ¹⁹F-NMR analysis.

The adhesive functional group is preferably at least one selected from the group consisting of a carbonyl group, a hydroxy group, a heterocyclic group, and an amino group.

The fluororesin may have an adhesive functional group introduced into a side chain and/or an end of the main chain of the polymer.

The term "carbonyl group" as used herein means a divalent carbon group containing a carbon-oxygen double bond, which is typified by -C(=O)-. Examples of an adhesive functional group containing a carbonyl group include, but are not limited to, those containing a carbonyl group as a moiety of the chemical structure, such as a carbonate group, a carboxylic acid halide group (halogenoformyl group), a formyl group, a carboxy group, an ester bond (-C(=O)O-), an acid anhydride bond (-C(=O)O-C(=O)-), an isocyanate group, an amide group, an imide group (-C(=O)-NH-C(=O)-), a urethane bond (-NH-C(=O)O-), a carbamoyl group (NH₂-C(=O)-), a carbamoyloxy group (NH₂-C(=O)O-), a ureido group (NH₂-C(=O)-NH-), and an oxamoyl group (NH₂-C(=O)-C(=O)-).

In groups such as an amide group, an imide group, a urethane bond, a carbamoyl group, a carbamoyloxy group, a ureido group, and an oxamoyl group, a hydrogen atom binding to the nitrogen atom thereof may be replaced by a hydrocarbon group such as an alkyl group.

In order to achieve easy introduction and to allow the fluororesin to have moderate heat resistance and good adhesion at relatively low temperatures, the adhesive functional group is preferably an amide group, a carbamoyl group, a hydroxy group, a carboxy group, a carbonate group, a carboxylic acid halide group, or an acid anhydride bond, more preferably an amide group, a carbamoyl group, a hydroxy group, a carbonate group, a carboxylic acid halide group, or an acid anhydride bond.

The fluororesin may be obtainable by any conventionally known polymerization method such as suspension polymerization, solution polymerization, emulsion polymerization, or bulk polymerization. In the polymerization, the conditions such as the temperature and the pressure, a polymerization initiator and other additives may appropriately be selected in accordance with the composition and amount of the fluororesin.

The fluororesin preferably has a melting point of 160-270°C, although not limited thereto. The melting point of the fluororesin is defined as the temperature corresponding to the maximum value on a heat-of-fusion curve obtained by increasing the temperature at a rate of 10°C/min using a DSC device (available from Seiko Instruments Inc.).

The fluororesin preferably has a molecular weight that allows the resulting laminate to exert characteristics such as good mechanical properties and low fuel permeability. For example, with the melt flow rate (MFR) taken as an indicator of the molecular weight, the MFR is preferably 0.5-100 g/10 min at any temperature within the range of about 230-350°C, which is a common molding temperature range for fluororesins. The MFR is more preferably 1-50 g/10 min, still more preferably 2-35 g/10 min. For example, for the fluororesin that is PCTFE, a CTFE copolymer, or a TFE/HFP/VdF copolymer, the MFR is measured at 297°C.

The MFR can be specified by determining the mass (g) of the polymer that flows out of a nozzle having a diameter of 2 mm and a length of 8 mm per unit time (10 minutes) at 297°C under a load of 5 kg, for example, using a melt indexer (available from Toyo Seiki Seisaku-sho, Ltd.).

In the invention, the fluororesin layer (A) may contain one or two or more of the fluororesins.

The fluororesin can lead to better chemical resistance and lower fuel permeability when it is a perhalo polymer. The perhalo polymer is a polymer in which every carbon atom constituting the main chain of the polymer is coupled with a halogen atom.

The fluororesin layer (A) may further contain any of various fillers such as inorganic powder, glass fiber, carbon powder, carbon fiber, and metal oxides in accordance with the purpose and application thereof to the extent that does not impair the performance thereof.

For example, in order to further reduce the fuel permeability, any of smectite-type lamellar viscous minerals such as montmorillonite, beidellite, saponite, nontronite, hectorite, sauconite, and stevensite and fine lamellar minerals having a high aspect ratio such as mica may be added.

In order to impart conductivity, a conductive filler may be added. Examples of the conductive filler include, but are not limited to, powder or fiber of conductive simple substance such as metal or carbon; powder of a conductive compound such as zinc oxide; and powder whose surface has undergone conductivity-imparting treatment. In the case of adding a conductive filler, the filler is preferably melt-kneaded into pellets in advance.

Examples of the powder or fiber of conductive simple substance include, but are not limited to, powder of metal such as copper or nickel; fiber of metal such as iron or stainless steel; and carbon black, carbon fiber, and carbon fibril disclosed in JP H03-174018 A.

The powder whose surface has undergone conductivity-imparting treatment is powder obtainable by subjecting the surface of non-conductive powder such as glass beads or titanium oxide to conductivity-imparting treatment.

Examples of the conductivity-imparting treatment on the surface include, but are not limited to, metal sputtering and electroless plating.

Carbon black is suitably used among the above conductive fillers because it is advantageous to economic efficiency and prevention of storage of static electricity.

The fluororesin composition containing a conductive filler preferably has a volume resistivity of 1 × 10⁰ to 1 × 10⁹ Ω·cm. The lower limit thereof is more preferably 1 × 10² Ω·cm, while the upper limit thereof is more preferably 1 × 10⁸ Ω·cm.

In addition to the filler, any other appropriate additives such as a thermal stabilizer, a reinforcing agent, an ultraviolet absorber, and a pigment may be added.

The fluorine-free resin layer (B) contains a fluorine-free resin. The fluorine-free resin has a SP value of 11.5-13.5 (cal/cm³)^{1/2} and a fuel permeability coefficient of 1.0 g·mm/m²/day or lower.

The SP value is preferably 11.7-13.3 (cal/cm³)^{1/2}, more preferably 12.0-13.0 (cal/cm³)^{1/2}, still more preferably 12.1-12.6 (cal/cm³)^{1/2}.

The SP value can be determined by the Fedors' equation (Polym. Eng. Sci., 14[2], 147(1974)). The fuel permeability coefficient is preferably 0.8 g·mm/m²/day or lower, more preferably 0.6 g·mm/m²/day or lower, still more preferably 0.4 g·mm/m²/day or lower.

The fuel permeability coefficient is a value calculated from the mass change determined as follows. Specifically, a SUS316 fuel permeability coefficient measurement cup having an inner diameter of 40 mmø and a height of 20 mm is charged with 18 mL of an isooctane-toluene-ethanol solvent mixture in which isooctane, toluene, and ethanol are mixed at a ratio by volume of 45:45:10; a fluorine-free resin sheet (diameter: 45 mm, thickness: 120 µm) is prepared from the measurement target resin by the following method and is put into the measurement cup; and then the mass change is determined at 60°C.

### (Method for producing fluorine-free resin sheet)

Resin pellets were put into a mold having a diameter of 120 mm. The workpiece was mounted on a press heated up to 300°C and the pellets were melt-pressed at a pressure of about 2.9 MPa, whereby a fluorine-free resin sheet having a thickness of 0.12 mm was obtained. This sheet was then processed to have a diameter of 45 mm and a thickness of 120 µm.

Examples of the fluorine-free resin include polyvinyl alcohol polymers (10.6 to 14.1), polyamides (9.9 to 11.6) such as nylon-6, nylon 66, nylon 11, nylon 12, and nylon 9T, polyacrylonitrile (13.1), polyvinylidene chloride (10.4), polyethylene terephthalate (11.3), polyethylene (7.7 to 8.4), and PPS (19.8). The SP values in the parentheses are the SP values of homopolymers, expressed in the unit (cal/cm³)^{1/2}. Although some of these fluorine-free resins have a SP value out of the range of 11.5-13.5 (cal/cm³)^{1/2}, the SP value can be adjusted to the range of 11.5-13.5 (cal/cm³)^{1/2} by copolymerization with other monomers. Preferred among the fluorine-free resins are polyvinyl alcohol polymers because they have excellent fuel permeation resistance.

Polyvinyl alcohol polymers are obtainable by saponifying a vinyl ester homopolymer or a copolymer of a vinyl ester and another monomer (particularly a copolymer of a vinyl ester and ethylene) using an alkali catalyst, for example. A typical compound used as the vinyl ester is vinyl acetate. Other fatty acid vinyl esters (e.g., vinyl propionate and vinyl pivalate) may also be used.

The vinyl ester component of the polyvinyl alcohol polymer preferably has a degree of saponification of 90 mol% or higher, more preferably 95 mol% or higher, still more preferably 96 mol% or higher. A polyvinyl alcohol polymer having a degree of saponification of lower than 90 mol% may have low fuel permeation resistance. A polyvinyl alcohol polymer that is an ethylene/vinyl alcohol copolymer (EVOH) and has a degree of saponification of lower than 90 mol% may have insufficient thermal stability, so that the resulting molded article may be likely to contain gels and blisters.

For the polyvinyl alcohol polymer that contains a mixture of two or more polyvinyl alcohol polymers having different degrees of saponification, the average calculated from the mixing ratio by mass is taken as the degree of saponification of the mixture.

Preferred among the above polyvinyl alcohol polymers are ethylene/vinyl alcohol copolymers (EVOH) because they are melt-moldable and have good fuel permeation resistance.

The EVOH preferably has an ethylene content of 5-60 mol%. An EVOH having an ethylene content of less than 5 mol% may have low fuel permeation resistance and poor melt moldability. The ethylene content of the EVOH is preferably 10 mol% or more, more preferably 15 mol% or more, most preferably 20 mol% or more. An EVOH having an ethylene content of more than 60 mol% may have insufficient fuel permeation resistance. The ethylene content is preferably 55 mol% or less, more preferably 50 mol% or less.

An EVOH used suitably has, as described above, an ethylene content of 5-60 mol% and a degree of saponification of 90 mol% or higher. In order to achieve excellent impact peel resistance, preferred is to use an EVOH having an ethylene content of 25-55 mol% and a degree of saponification of 90 to < 99 mol%.

For the EVOH that contains a mixture of two or more EVOHs having different ethylene contents, the average calculated from the mixing ratio by mass is taken as the ethylene content of the mixture. In this case, EVOHs having the greatest difference in ethylene content preferably have a difference in ethylene content of 30 mol% or less and a difference in degree of saponification of 10 mol% or less. A mixture that fails to meet these conditions may impair the transparency of the resulting crosslinked product. The difference in ethylene content is more preferably 20 mol% or less, still more preferably 15 mol% or less. The difference in degree of saponification is more preferably 7 mol% or less, still more preferably 5 mol% or less. For the multilayer structure that is molded from the crosslinked product of the crosslinkable composition and is desired to have impact peel resistance and gas barrier properties balanced at a higher level, preferred is to mix an EVOH (b'1) having an ethylene content of 25-55 mol% and a degree of saponification of 90 to < 99 mol% and an EVOH (b'2) having an ethylene content of 25-55 mol% and a degree of saponification of 99 mol% or more at a mixing ratio by mass (b'1)/(b'2) of (5/95)-(95/5).

The ethylene content and degree of saponification of the EVOH can be determined by nuclear magnetic resonance (NMR) analysis.

The EVOH may contain, as a copolymerized unit, a small amount of a monomer unit other than the ethylene unit and the vinyl alcohol unit to the extent that does not inhibit the purposes of the invention. Examples of such a monomer include the following compounds: α-olefins such as propylene, 1-butene, isobutene, 4-methyl-1-pentene, 1-hexene, and 1-octene; unsaturated carboxylic acids such as itaconic acid, methacrylic acid, acrylic acid, and maleic acid, salts, partial or complete esters, nitriles, amides, and anhydrides thereof; vinylsilane compounds such as vinyltrimethoxysilane, vinyltriethoxysilane, vinyltri(β-methoxyethoxy)silane, and γ-methacryloxypropyltrimethoxysilane; unsaturated sulfonic acids and salts thereof; unsaturated thiols; and vinylpyrrolidones.

It is also preferred to modify the EVOH by a conventionally known method to impart flexibility to the EVOH. Even if the modification to impart flexibility slightly reduces the fuel permeation resistance, the oxygen transmission rate can be adjusted by adjusting the production method of the EVOH.

The EVOH preferably has a SP value of 11.7-13.3 (cal/cm³)^{1/2}, more preferably 12.0-13.0 (cal/cm³)^{1/2}, still more preferably 12.1-12.6 (cal/cm³)^{1/2}. The EVOH having a SP value within the above range can lead to good fuel permeation resistance.

The EVOH preferably has a melt flow rate (MFR) (210°C, under a load of 2160 g, in accordance with JIS K7210) of 0.1-100 g/10 min, more preferably 0.5-50 g/10 min, still more preferably 1-30 g/10 min.

The fluorine-free resin may contain any of various additives such as stabilizers, e.g., thermal stabilizers, reinforcing agents, fillers, ultraviolet absorbers, and pigments to the extent that does not inhibit the purposes of the invention. These additives can improve the properties of the fluorine-free resin such as thermal stability, surface hardness, abrasion resistance, charge ability, and weather resistance.

The first laminate of the invention preferably further contains a resin layer (C).

The resin constituting the resin layer (C) is one that has excellent mechanical strength and can mainly function to maintain the pressure resistance and the shape of the molded article. Examples of the resin include polyamide resins, polyolefin resins, vinyl chloride resins, polyurethanes resins, polyester resins, polyaramid resins, polyimide resins, polyamideimide resins, polyphenyleneoxide resins, polyacetal resins, polycarbonate resins, acrylic resins, styrene resins, acrylonitrile/butadiene/styrene resins (ABS), cellulose resins, polyetheretherketone resins (PEEK), polysulfone resins, polyethersulfone resins (PES), polyetherimide resins, and polyethylene. The presence of the resin layer (C) allows the first laminate of the invention to have excellent mechanical strength.

In particular, the resin constituting the resin layer (C) is preferably at least one selected from the group consisting of a polyamide resin, a polyolefin resin, and polyethylene.

The polyamide resin contains a polymer having an amide bond (-NH-C(=O)-) as a repeating unit in the molecule.

The polyamide resin may be what is called a nylon resin, which contains a polymer in which the amide bonds in the molecule are attached to aliphatic or alicyclic structures, or may be what is called an aramid resin, which contains a polymer in which the amide bonds in the molecule are attached to aromatic structures.

Examples of the nylon resin include, but are not limited to, those containing any of polymers such as nylon 6, nylon 66, nylon 11, nylon 12, nylon 610, nylon 612, nylon 6/66, nylon 66/12, nylon 46, nylon 6T, nylon 9T, nylon 10T, and metaxylylenediamine/adipic acid copolymers. Two or more of these may be used in combination.

Examples of the aramid resin include, but are not limited to, polyparaphenylene terephthalamide and polymetaphenylene isophthalamide.

The polyamide resin may contain a polymer in which an amide bond-free structure as a repeating unit is block-copolymerized or graft-copolymerized with part of the molecule. Examples of such a polyamide resin include those containing any of polyamide elastomers such as nylon 6/polyester copolymers, nylon 6/polyether copolymers, nylon 12/polyester copolymers, and nylon 12/polyether copolymers. These polyamide elastomers are obtainable by block copolymerization of a nylon oligomer and a polyester oligomer via an ester bond, or block copolymerization of a nylon oligomer and a polyether oligomer via an ether bond. Examples of the polyester oligomer include polycaprolactone and polyethylene adipate. Examples of the polyether oligomer include polyethylene glycol, polypropylene glycol, and polytetramethylene glycol. Preferred polyamide elastomers are nylon 6/polytetramethylene glycol copolymers and nylon 12/polytetramethylene glycol copolymers.

In order to achieve sufficient mechanical strength even when the polyamide resin layer is thin, the polyamide resin is particularly preferably nylon 6, nylon 66, nylon 11, nylon 12, nylon 610, nylon 612, nylon 6/66, nylon 66/12, a nylon 6/polyester copolymer, a nylon 6/polyether copolymer, a nylon 12/polyester copolymer, a nylon 12/polyether copolymer. Two or more of these may be used in combination.

The polyolefin resin is a resin containing a monomer unit derived from a vinyl group-containing monomer free of a fluorine atom. Any vinyl group-containing monomer free of a fluorine atom may be used, and preferred in applications that require interlayer adhesion are those having a polar functional group described above.

Examples of the polyolefin resin include, but are not limited to, polyolefins such as polyethylene, polypropylene, and high density polyolefins, as well as modified polyolefins obtained by modifying the polyolefins with, for example, maleic anhydride, epoxy-modified polyolefins, and amine-modified polyolefins.

The resin constituting the resin layer (C) may contain any of various additives such as stabilizers, e.g., thermal stabilizers, reinforcing agents, fillers, ultraviolet absorbers, and pigments to the extent that does not inhibit the purposes of the invention. These additives can improve the properties of the fluorine-free organic material such as thermal stability, surface hardness, abrasion resistance, charge ability, and weather resistance.

The polyamide resin preferably has an amine value of 10-80 (equivalents/10⁶ g). The polyamide resin having an amine value within the above range can provide excellent interlayer adhesion even in the case of coextrusion at a relatively low temperature. A polyamide resin having an amine value of less than 10 (equivalents/10⁶ g) may cause insufficient interlayer adhesion. A polyamide resin having an amine value of more than 80 (equivalents/10⁶ g) may cause the resulting laminate to have insufficient mechanical strength, to be more susceptible to discoloration during storage, and to exhibit poor handleability. The lower limit of the amine value is preferably 15 (equivalents/10⁶ g), more preferably 20 (equivalents/10⁶ g), still more preferably 23 (equivalents/10⁶ g). The upper limit thereof is preferably 60 (equivalents/10⁶ g), more preferably 50 (equivalents/10⁶ g).

The amine value herein is a value determined by dissolving 1 g of the polyamide resin in 50 mL of m-cresol under heat and titrating the solution using a 1/10 normal aqueous p-toluenesulfonic acid solution with Thymol Blue as an indicator. The amine value herein means the amine value of the polyamide resin before lamination unless otherwise specified. Although some of the amino groups contained in the polyamide resin before lamination are considered to be consumed for adhesion with an adjacent layer, the number of such amino groups is very small relative to the entire layer. Thus, the amine value of the polyamide resin before lamination and the amine value in the first laminate of the invention are substantially the same.

The first laminate of the invention includes an adhesive layer (S). The presence of the adhesive layer (S) can improve the interlayer adhesion.

Typical examples of the resin constituting the adhesive layer (S) include TFE/Et/HFP copolymers containing an adhesive functional group, functional group-modified polyethylene, and high amine value nylons. The resin may be appropriately selected according to the physical properties of two layers to be bonded. Preferred among these are polypropylene, polyethylene, and high amine value nylon.

The resin constituting the adhesive layer (S) has an amine value of 10-80 (equivalents/10⁶ g). The resin having an amine value within the above range can provide excellent interlayer adhesion even in the case of coextrusion at a relatively low temperature. A resin having an amine value of less than 10 (equivalents/10⁶ g) may cause insufficient interlayer adhesion. A resin having an amine value of more than 80 (equivalents/10⁶ g) may cause the resulting laminate to have insufficient mechanical strength, to be more susceptible to discoloration during storage, and to exhibit poor handleability. The lower limit of the amine value is preferably 15 (equivalents/10⁶ g), more preferably 20 (equivalents/10⁶ g), still more preferably 23 (equivalents/10⁶ g). The upper limit thereof is preferably 60 (equivalents/10⁶ g).

The first laminate of the invention preferably has a fuel permeability coefficient of 0.05 g·mm/m²/day or lower.

The first laminate of the invention having a fuel permeability coefficient within the above range can have high fuel permeation resistance. The lower limit of the fuel permeability coefficient may be, for example, 0.001 g·mm/m²/day as long as the fuel permeability coefficient is within the above range. The upper limit of the fuel permeability coefficient is more preferably 0.04 g·mm/m²/day, still more preferably 0.03 g·mm/m²/day, most preferably 0.02 g·mm/m²/day, particularly preferably 0.015 g·mm/m²/day.

The fuel permeability coefficient herein is a value calculated from the mass change determined as follows. Specifically, a fuel permeability coefficient measurement cup is charged with an isooctane-toluene-ethanol solvent mixture (CE10) in which isooctane, toluene, and ethanol are mixed at a ratio by volume of 45:45:10; the laminate as the measurement target is put into the measurement cup; and then the mass change is determined at 60°C.

Examples of preferred laminated structures for a two-layer laminate include: layer (A)/layer (B); and layer (B)/layer (A), each from the liquid-contact side.

A layer (A)/layer (B) laminated structure is preferred among these as a tube for fuel. It can also be used as a brake hose when a metal blade is attached thereto.

Examples of preferred laminated structures for a three-layer laminate include: layer (A)/layer (B)/layer (C); layer (A)/layer (S)/layer (B); layer (B)/layer (A)/layer (C); and layer (B)/layer (S)/layer (A).

A layer (A)/layer (B)/layer (C) laminated structure and a layer (A)/layer (S)/layer (B) laminated structure are preferred among these as tubes for fuel and liquid chemical tubes that require chemical resistance.

Examples of preferred laminated structures for a four-layer laminate include: layer (A)/layer (S)/layer (B)/layer (C); layer (A)/layer (B)/layer (S)/layer (C); layer (B)/layer (S)/layer (A)/layer (C); and layer (B)/layer (A)/layer (S)/layer (C).

Laminates having any of these four-layer structures are preferred as tubes for fuel and liquid chemical tubes. More preferred among these is a layer (A)/layer (S)/layer (B)/layer (C) laminated structure.

Examples of preferred laminated structures for a five-layer laminate include: layer (A)/layer (S)/layer (B)/layer (S)/layer (C); and layer (B)/layer (S)/layer (A)/layer (S)/layer (C).

Examples of preferred laminated structures for a six-layer laminate include: layer (A)/layer (S)/layer (S)/layer (B)/layer (S)/layer (C).

A layer (A)/layer (S)/layer (B)/layer (C) laminated structure, a layer (A)/layer (S)/layer (B)/layer (S)/layer (C) laminated structure, and a layer (A)/layer (S)/layer (S)/layer (B)/layer (S)/layer (C) laminated structure are preferred as tubes for fuel and liquid chemical tubes.

Each of the layer (A), layer (B), layer (C), and layer (S) may be a single layer or a layer having a multilayer structure including two or more layers.

The first laminate of the invention may include a different layer other than the layer (A), layer (B), layer (C), and layer (S). Examples of such a different layer include protecting layers, colored layers, marking layers, and dielectric layers for static protection in the laminate. A layer such as a protecting layer or a dielectric layer is preferably an outermost layer of the laminate considering their functions.

The first laminate of the invention is a laminate including the layer (A) containing a fluororesin and the layer (B) containing a fluorine-free resin.

Each of the layer (A) and layer (B) in the laminate may be a single layer or a layer having a multilayer structure including two or more layers.

The first laminate of the invention includes the layer (A) and the layer (B) and may further include a different layer. An example of such a different layer is a layer that is made of elastomer, for example, and that protects the laminate from vibrations or shocks and imparts flexibility. The elastomer may be a thermoplastic elastomer, and may be at least one selected from the group consisting of a polyamide elastomer, a polyurethane elastomer, a polyester elastomer, a polyolefin elastomer, a styrene/butadiene elastomer, and a vinyl chloride elastomer.

The first laminate of the invention is preferably a laminate including the resin layer (C) in addition to the layer (A) containing a fluororesin and the layer (B) containing a fluorine-free resin.

The first laminate of the invention may include the adhesive layer (S) between the layer (A) and the layer (B).

The first laminate of the invention may be, for example, a laminate including the layer (A) and the layer (B) laminated in this order, a laminate including the layer (A), the layer (B), and the layer (C) laminated in this order, or a laminate including the layer (A), the layer (S), the layer (B), and the layer (C) laminated in this order.

Each of the layer (A), layer (B), layer (C), and layer (S) may be a single layer or a layer having a multilayer structure including two or more layers.

The layer (A) having a multilayer structure including two or more layers may include a layer containing a fluorine-containing ethylenic polymer mixed with the aforementioned conductive filler and a layer containing a fluorine-containing ethylenic polymer free of conductive filler.

For the first laminate of the invention including the adhesive layer (S) between the layer (A) and the layer (B), the adhesive layer (S) is preferably in contact with the layer (A) and the layer (B). For the first laminate of the invention including the layer (C), the layer (C) is preferably in contact with the layer (B).

The first laminate of the invention may not necessarily have a clear boundary between the layers in contact with each other; it may have a layered structure in which the molecular chains of the polymers constituting the layers penetrate into the opposite layers through the contact surface therebetween and a concentration gradient is thereby formed.

The first laminate of the invention may be formed by, for example, a method (1) including coextrusion-molding the layers constituting the laminate in a molten state and hotmelt-bonding (fusion-bonding) the layers to form a multilayer laminate in one step (coextrusion molding).

In addition to the method (1), examples of the method for forming the first laminate of the invention include: a method (2) including preparing each layer separately with an extruder and stacking and bonding the layers together by hot melt bonding; a method (3) including preparing a layer in advance and extruding a molten resin onto a surface of the layer, thereby forming a laminate; and a method (4) including preparing a layer in advance, electrostatically applying, to a surface of the layer, a polymer that is to constitute a different layer to be adjacent to the layer prepared in advance, and then heating the resulting coated article as a whole or from the coated side to melt the coating polymer under heat and form the different layer.

For the first laminate of the invention that is in the form of a tube or hose, an exemplary method corresponding to the method (2) is a method (2a) including forming each tubular layer separately with an extruder and coating a layer that serves as an inner layer with a layer that is to contact the inner layer using a heat-shrinkable tube. An exemplary method corresponding to the method (3) is a method (3a) including forming a layer that serves as an inner layer using an inner layer extruder and then forming, on the periphery of the layer, a layer that is to contact the inner layer using an outer layer extruder. An exemplary method corresponding to the method (4) is a method (4a) including electrostatically applying a polymer that is to constitute an inner layer to the inside of a layer that is to contact the inner layer, and then heating the resulting coated article as a whole in a heating oven or heating it from the inside with a bar-shape heating device inserted therein to melt and mold the polymer that is to constitute the inner layer under heat.

The first laminate of the invention in which the layers constituting it are coextrudable ones is usually formed by the coextrusion molding of the method (1). Examples of the coextrusion molding include conventionally known multilayer extrusion production methods such as a multi-manifold method and a feed block method.

In the molding methods (2) and (3), each layer formed may be subjected to surface treatment on the contact surface of each layer with another layer so as to enhance the interlayer adhesion. Examples of the surface treatment include: etching treatment such as sodium etching treatment; corona treatment; and plasma treatment such as low temperature plasma treatment.

Preferred molding methods are the method (1) and also the methods (2) and (3) in which the layers are surface-treated before lamination. The method (1) is most preferred.

Another possible method for molding the first laminate of the invention is to laminate layers of multiple materials in multiple steps by rotation molding. In such a case, the material of the outer layer may not necessarily have a melting point higher than that of the material of the inner layer, and the melting point of the material of the inner layer may be higher than that of the outer layer by 100°C or more. In this case, the inside is also preferably provided with a heating unit.

The first laminate of the invention may have any of various forms, such as a film form, a sheet form, a tube form, a hose form, a bottle form, and a tank form. The film, sheet, tube, and hose forms may be wave-patterned, corrugated, or convoluted.

For the first laminate of the invention that is in the form of a tube or hose having a region where multiple folds are disposed in a wave pattern in a circular shape, it is compressed at one portion of the circular shape while it is extended at another portion of the circular shape within the region, so that the tube or hose can be easily bent at any angle without stress fatigue or delamination.

The wave-patterned region may be formed by any method. For example, it can easily be formed by preparing a linear tube and then giving a predetermined shape such as a wave shape to the tube by in-mold decoration.

The laminate of the invention has very low fuel permeability and is excellent in heat resistance, oil resistance, fuel oil resistance, antifreeze resistance, and steam resistance. The laminate can sufficiently withstand use under severe conditions and can be used in various applications.

The first laminate of the invention can be used in the following applications.

For example, the laminate has properties suitable for seals such as gaskets, non-contact or contact packings (e.g., self-seal packings, piston rings, split ring packings, mechanical seals, oil seals), bellows, diaphragms, hoses, tubes, electric wires, films, sheets, bottles, containers, and tanks which are required to have heat resistance, oil resistance, fuel oil resistance, antifreeze resistance, and steam resistance, of engine bodies, main drive systems, valve train systems, lubrication and cooling systems, fuel systems, and intake and exhaust systems of automobile engines, transmission systems of driveline systems, steering systems and braking systems of chassis, and basic electrical parts of electrical equipment, electrical parts of control systems, and electrical equipment accessories.

The laminate can be used for films and sheets including films for food, sheets for food, films for chemicals, sheets for chemicals, diaphragms and packings of diaphragm pumps,
tubes and hoses including tubes for fuel and hoses for fuel such as tubes for automobile fuel and hoses for automobile fuel, tubes for solvent and hoses for solvent, tubes for coating materials and hoses for coating materials (including those for printers), radiator hoses, air conditioner hoses, and brake hoses of automobiles, electric wire coating materials, tubes for food and beverage and hoses for food and beverage, underground tubes and hoses for gas stations, and tubes and hoses for offshore oil fields (including injection tubes and crude oil transport tubes),
bottles, containers, and tanks including radiator tanks of automobiles, fuel tanks such as gasoline tanks, solvent tanks, tanks for coating materials, chemical containers such as containers for chemicals for semiconductors, and tanks for food and beverage, and
other applications including seals for automobiles such as flange gaskets of carburetors and O-rings of fuel pumps, machine-related seals such as seals of hydraulic machines, gears, medical tubes (including catheters), and tubes for cableways.

Specific examples include gaskets such as cylinder head gaskets, cylinder head cover gaskets, sump packings, and general gaskets, seals such as O-rings, packings, and timing belt cover gaskets, and hoses such as control hoses, of engine bodies, anti-vibration sheets of engine mounts, and sealants for high-pressure valves in hydrogen storage systems;
shaft seals such as crankshaft seals and camshaft seals of main drive systems;
valve stem seals such as engine valves of valve train systems;
engine oil cooler hoses of engine oil coolers, oil return hoses, seal gaskets, water hoses used around radiators, and vacuum pump oil hoses of vacuum pumps, of lubrication and cooling systems;
oil seals, diaphragms, and valves of fuel pumps, fuel hoses such as filler (neck) hoses, fuel supply hoses, fuel return hoses, and vapor (evaporator) hoses, in-tank hoses, filler seals, tank packings, and in-tank fuel pump mounts of fuel tanks, tube bodies and connector O-rings of fuel pipe tubes, injector cushion rings, injector seal rings, injector O-rings, pressure regulator diaphragms, and check valves of fuel injection systems, needle valve petals, accelerator pump pistons, flange gaskets, and control hoses of carburetors, and valve seats and diaphragms of combined air controlling (CAC) systems in fuel systems;
intake manifold packings and exhaust manifold packings of manifolds, diaphragms, control hoses, and emission control hoses of exhaust gas recirculation (EGR) systems, diaphragms of BPT, after burn preventive valve seats of AB valves, throttle body packings of throttles, turbo oil hoses (supply), turbo oil hoses (return), turbo air hoses, intercooler hoses, and turbine shaft seals of turbochargers, of intake and exhaust systems;
transmission-related bearing seals, oil seals, O-rings, packings, and torque converter hoses, and gear oil hoses, ATF hoses, O-rings, and packings of ATs, of transmission systems;
power steering oil hoses of steering systems;
oil seals, O-rings, packings, brake fluid hoses, air valves, vacuum valves, and diaphragms of vacuum servos, piston cups of master cylinders, caliper seals, and boots, of braking systems;
insulators and sheaths of electric wires (harnesses), and tubes of harness-holding parts of basic electrical parts;
cover materials for sensor lines of control system electrical parts; and
O-rings, packings, and air conditioner hoses of electrical equipment accessories, and wiper blades of exterior parts.

In addition to the field of automobiles, for example, the laminate of the invention can be suitably used in the following applications: oil-resistant, chemical-resistant, heat-resistant, steam-resistant, or weather-resistant packings, O-rings, hoses, other sealants, diaphragms, and valves in a means of transportation, such as shipment and aircraft; similar packings, O-rings, sealants, diaphragms, valves, hoses, rolls, tubes, chemical-resistant coatings, and linings in chemical plants; similar packings, O-rings, hoses, sealants, belts, diaphragms, valves, rolls, and tubes in food plant equipment and food-related devices (including household utensils); similar packings, O-rings, hoses, sealants, diaphragms, valves, and tubes in nuclear power plant equipment; similar packings, O-rings, hoses, sealants, diaphragms, valves, rolls, tubes, linings, mandrels, electric wires, expansion joints, belts, and weather strips in general industrial parts; and roll blades of plain paper copiers.

The laminate can be suitably used for food-related sealants, sealants for medical and chemical applications, and O-rings, packings, and sealants in general industrial fields. In particular, the laminate can be suitably used for packing of lithium ion batteries because the laminate maintains the chemical resistance and the sealability simultaneously. Further, the laminate can be suitably used in applications requiring slidability with low friction.

Specific examples of medical molded articles to which the laminate of the invention is applicable include: drug closures, bottle cap seals, can seals, medicinal tapes, medicinal pads, syringe packings, bases for percutaneous absorption drugs, teats of baby bottles, medical bags, catheters, infusion sets, coinjection tubes, cap liners, caps of vacuum blood collection tubes, cyringe gaskets, infusion tubes, gaskets and caps of medical equipment, syringe tips, grommets, caps of blood collection tubes, cap seals, packings, O-rings, sheath introducers, dilator, guiding sheaths, blood circuits, cardiopulmonary bypass circuits, tubes for rotablators, catheter needles, infusion sets, infusion tubes, needleless infusion systems, infusion bags, blood bags, blood component separation bags, tubes for blood component separation bags, artificial blood vessels, arterial cannulae, stents, protective tubes for endoscope treatment devices, scope tubes for endoscopes, top overtubes for endoscopes, guiding tubes for pharyngeal transit, tubes for coronary artery bypass graft surgery, ileus tubes, tubes for percutaneous transhepatic biliary drainage, outer tubes for electrosurgical knives, outer tubes for ultrasonic scalpels, outer tubes for dissecting forceps, and bags for cell culture.

The first laminate of the invention can be suitably used in applications that involve contact with flammable liquid, such as tubes, hoses, and tanks. In such a case, the portion that is to contact liquid is preferably the layer (A). The portion that is to contact liquid is usually the inner layer. Thus, when the layer (A) is the inner layer, the layer (B) is the outer layer. The "inner layer" and the "outer layer" herein only describe which of the layer (A) and layer (B) is located on the inner side or the outer side, or that the layer is located between these two layers, in a shape involving the concept of the inside and outside, such as a tube, hose, or tank shape. The laminate may include a different layer on a surface of the layer (A) opposite to the surface in contact with the layer (B), between the layer (A) and the layer (B), and/or a surface of the layer (B) opposite to the surface in contact with the layer (A).

The "intermediate layer" herein is a concept referring to a layer between the inner layer and the outer layer.

For the first laminate of the invention that is to contact flammable liquid such as gasoline, the contact with flammable liquid tends to cause accumulation of static electricity. To avoid ignition due to the static electricity, the layer that is to contact liquid preferably contains a conductive filler.

The laminate which is a tube for fuel is encompassed by the first laminate of the invention.

As described above, the first laminate of the invention has excellent fuel permeation resistance and thus can be suitably used as a laminate for fuel tubes that is used for tubes for fuel.

The first laminate of the invention may have any preferred layer structure. Examples of structures particularly preferred as tubes for fuel include:
a laminate including
   layer 1: a layer containing a CTFE copolymer and
   layer 2: a layer containing an ethylene/vinyl alcohol copolymer;
a laminate including
   layer 1: a layer containing a CTFE copolymer,
   layer 2: a layer containing a polyamide resin, and
   layer 3: a layer containing an ethylene/vinyl alcohol copolymer;
a laminate including
   layer 1: a layer containing a CTFE copolymer,
   layer 2: a layer containing an ethylene/vinyl alcohol copolymer, and
   layer 3: a layer containing a polyamide resin;
a laminate including
   layer 1: a layer containing a CTFE copolymer,
   layer 2: a layer containing a polyamide resin,
   layer 3: a layer containing an ethylene/vinyl alcohol copolymer, and
   layer 4: a layer containing a polyamide resin;
a laminate including
   layer 1: a layer containing a CTFE copolymer,
   layer 2: a layer containing a polyamide resin,
   layer 3: a layer containing an ethylene/vinyl alcohol copolymer, and
   layer 4: a layer containing a polyethylene resin;
a laminate including
   layer 1: a layer containing a CTFE copolymer,
   layer 2: a layer containing a polyamide resin,
   layer 3: a layer containing an ethylene/vinyl alcohol copolymer,
   layer 4: a layer containing a polyamide resin, and layer 5: a layer containing a polyamide resin;
a laminate including
   layer 1: a layer containing a CTFE copolymer,
   layer 2: a layer containing a polyamide resin,
   layer 3: a layer containing an ethylene/vinyl alcohol copolymer,
   layer 4: a layer containing a polyamide resin, and layer 5: a layer containing a polyethylene resin;
a laminate including
   layer 1: a layer containing a CTFE copolymer,
   layer 2: a layer containing a polyamide resin,
   layer 3: a layer containing a polyamide resin,
   layer 4: a layer containing an ethylene/vinyl alcohol copolymer,
   layer 5: a layer containing a polyamide resin, and
   layer 6: a layer containing a polyamide resin, and
a laminate including
   layer 1: a layer containing a CTFE copolymer,
   layer 2: a layer containing a polyamide resin,
   layer 3: a layer containing a polyamide resin,
   layer 4: a layer containing an ethylene/vinyl alcohol copolymer,
   layer 5: a layer containing a polyamide resin, and
   layer 6: a layer containing a polyethylene resin.

The layers of the above laminates for fuel tubes are laminated in the order of the numbers of the layers. The layer 1 is preferably the innermost layer.

The second laminate of the invention is a laminate having a fuel permeability coefficient of 0.05 g·mm/m²/day or lower.

The second laminate of the invention has a fuel permeability coefficient within the above range and thus has high fuel permeation resistance. The lower limit of the fuel permeability coefficient may be, for example, 0.001 g·mm/m²/day as long as the fuel permeability coefficient is within the above range. The upper limit of the fuel permeability coefficient is more preferably 0.04 g·mm/m²/day, still more preferably 0.03 g·mm/m²/day, most preferably 0.02 g·mm/m²/day, particularly preferably 0.015 g·mm/m²/day.

The second laminate of the invention preferably includes a fluororesin layer (A) containing a fluororesin and a fluorine-free resin layer (B) containing a fluorine-free resin layer.

Each of the components is described below.

The fluororesin layer (A) contains a fluororesin. The fluororesin preferably has a fuel permeability coefficient of 2.0 g·mm/m²/day or lower.

The fluororesin having a fuel permeability coefficient of 2.0 g·mm/m²/day or lower can lead to excellently low fuel permeability. Thus, the second laminate of the invention can suitably be used as a tube for fuel or a hose for fuel, for example.

The fuel permeability coefficient is preferably 1.5 g·mm/m²/day or lower, more preferably 0.8 g·mm/m²/day or lower, still more preferably 0.55 g·mm/m²/day or lower, particularly preferably 0.5 g·mm/m²/day or lower.

The fuel permeability coefficient is a value calculated from the mass change determined as follows. Specifically, a SUS316 fuel permeability coefficient measurement cup having an inner diameter of 40 mmø and a height of 20 mm is charged with 18 mL of an isooctane-toluene-ethanol solvent mixture in which isooctane, toluene, and ethanol are mixed at a ratio by volume of 45:45:10; a fluororesin sheet (diameter: 45 mm, thickness: 120 µm) is prepared from the measurement target resin by the following method and is put into the measurement cup; and then the mass change is determined at 60°C.

### (Method for producing fluororesin sheet)

Resin pellets were put into a mold having a diameter of 120 mm. The workpiece was mounted on a press heated up to 300°C and the pellets were melt-pressed at a pressure of about 2.9 MPa, whereby a fluororesin sheet having a thickness of 0.12 mm was obtained. This sheet was then processed to have a diameter of 45 mm and a thickness of 120 µm.

In order to provide a laminate having excellently low fuel permeability, the fluororesin is preferably at least one selected from the group consisting of polychlorotrifluoroethylene (PCTFE), a chlorotrifluoroethylene (CTFE) copolymer, and a tetrafluoroethylene (TFE)/hexafluoropropylene (HFP) copolymer containing an adhesive functional group, and a TFE/HFP/vinylidene fluoride (VdF) copolymer. In order to achieve flexibility, the fluororesin is more preferably at least one selected from the group consisting of a CTFE copolymer, a TFE/HFP copolymer containing an adhesive functional group, and a TFE/HFP/VdF copolymer. In order to achieve low fuel permeability, a CTFE copolymer is still more preferred.

A lower VdF content leads to lower fuel permeability. Thus, the TFE/HFP/VdF copolymer preferably satisfies a TFE/HFP/VdF copolymerization ratio (ratio by mol%) of (75-95)/(0.1-10)/(0.1-19), more preferably (77-95)/(1-8)/(1-17) (ratio by mole), still more preferably (77-95)/(2-8)/(2-16.5) (ratio by mole), most preferably (77-90)/(3-8)/(5-16) (ratio by mole). The TFE/HFP/VdF copolymer may contain 0-20 mol% of a different monomer. The different monomer may be at least one monomer selected from the group consisting of fluorine-containing monomers such as perfluoro(methyl vinyl ether), perfluoro(ethyl vinyl ether), perfluoro(propyl vinyl ether), chlorotrifluoroethylene, 2-chloropentafluoropropene, perfluorinated vinyl ether (e.g., perfluoroalkoxy vinyl ethers such as CF₃OCF₂CF₂CF₂OCF=CF₂), perfluoroalkyl vinyl ether, perfluoro-1,3-butadiene, trifluoroethylene, hexafluoroisobutene, vinyl fluoride, ethylene, propylene, alkyl vinyl ether, BTFB (H₂C=CH-CF₂-CF₂-Br), BDFE (F₂C=CHBr), and BTFE(F₂C-CFBr). Preferred are perfluoro(methyl vinyl ether), perfluoro(ethyl vinyl ether), perfluoro (propyl vinyl ether), BTFB (H₂C=CH-CF₂-CF₂-Br), BDFE (F₂C=CHBr), and BTFE (F₂C-CFBr).

The PCTFE is a homopolymer of chlorotrifluoroethylene.

The CTFE copolymer preferably contains a copolymerized unit (CTFE unit) derived from CTFE and a copolymerized unit derived from at least one monomer selected from the group consisting of TFE, HFP, perfluoro(alkyl vinyl ether) (PAVE), VdF, vinyl fluoride, hexafluoroisobutene, monomers represented by the following formula:

CH₂=CX¹(CF₂)ₙX²

(wherein X¹ is H or F; X² is H, F, or Cl; and n is an integer of 1-10), ethylene, propylene, 1-butene, 2-butene, vinyl chloride, and vinylidene chloride.

The CTFE copolymer is more preferably a perhalopolymer.

The CTFE copolymer more preferably contains a CTFE unit and a copolymerized unit derived from at least one monomer selected from the group consisting of TFE, HFP, and PAVE, still more preferably consists essentially of these copolymerized units. In order to achieve low fuel permeability, the CTFE copolymer is preferably free from a monomer containing a CH bond, such as ethylene, vinylidene fluoride, and vinyl fluoride.

The CTFE copolymer preferably contains a CTFE unit in an amount of 10-90 mol% of all monomer units.

The CTFE copolymer particularly preferably contains a CTFE unit, a TFE unit, and a monomer (α) unit derived from a monomer (α) copolymerizable therewith.

The "CTFE unit" and the "TFE unit" are respectively a moiety (-CFCl-CF₂-) derived from CTFE and a moiety (-CF₂-CF₂-) derived from TFE in the molecular structure of the CTFE copolymer. The "monomer (α) unit" is similarly a moiety formed by addition of a monomer (α) in the molecular structure of the CTFE copolymer.

The monomer (α) may be any monomer copolymerizable with CTFE and TFE. Examples thereof include ethylene (Et), vinylidene fluoride (VdF), PAVE represented by CF₂=CF-ORf¹ (wherein Rf¹ is a C1-C8 perfluoroalkyl group), vinyl monomers represented by CX³X⁴=CX⁵(CF₂)ₙX⁶ (wherein X³, X⁴, and X⁵ are the same as or different from each other, and are each a hydrogen atom or a fluorine atom; X⁶ is a hydrogen atom, a fluorine atom, or a chlorine atom; and n is an integer of 1-10), and alkyl perfluorovinyl ether derivatives represented by CF₂=CF-O-Rf² (wherein Rf² is a C1-C5 perfluoroalkyl group).

Preferred among the alkyl perfluorovinyl ether derivatives are those in which Rf² is a C1-C3 perfluoroalkyl group, and more preferred is CF₂=CF-OCF₂-CF₂CF₃.

The monomer (α) is preferably at least one selected from the group consisting of PAVE, the vinyl monomers, and the alkyl perfluorovinyl ether derivatives, more preferably at least one selected from the group consisting of PAVE and HFP, particularly preferably PAVE.

For the ratio of the CTFE unit and the TFE unit in the CTFE copolymer, the CTFE unit represents 15-90 mol% and the TFE unit represents 85-10 mol%, more preferably the CTFE unit represents 20-90 mol% and the TFE unit represents 80-10 mol%. Also preferred is a structure in which the CTFE unit represents 15-25 mol% and the TFE unit represents 85-75 mol%.

The CTFE copolymer preferably satisfies that the CTFE unit and the TFE unit represent 90-99.9 mol% in total and the monomer (α) unit represents 0.1-10 mol%. Less than 0.1 mol% of the monomer (α) unit may cause poor moldability, environmental stress cracking resistance, and fuel crack resistance. More than 10 mol% thereof tends to cause insufficiently low fuel permeability, poor heat resistance, and poor mechanical properties.

In order to achieve low fuel permeability and good adhesion, the fluororesin is more preferably at least one selected from the group consisting of PCTFE, a CTFE/TFE/PAVE copolymer, and a TFE/HFP/VdF copolymer, still more preferably at least one selected from the group consisting of a CTFE/TFE/PAVE copolymer and a TFE/HFP/VdF copolymer, particularly preferably a CTFE/TFE/PAVE copolymer.

The CTFE/TFE/PAVE copolymer is a copolymer consisting essentially of CTFE, TFE, and PAVE.

Examples of the PAVE in the CTFE/TFE/PAVE copolymer include perfluoro(methyl vinyl ether) (PMVE), perfluoro(ethyl vinyl ether) (PEVE), perfluoro(propyl vinyl ether) (PPVE), and perfluoro(butyl vinyl ether). Preferred among these is at least one selected from the group consisting of PMVE, PEVE, and PPVE.

In the CTFE/TFE/PAVE copolymer, the PAVE unit preferably represents 0.5 mol% or more and 5 mol% or less of all monomer units.

The constituent units such as a CTFE unit are values obtainable by ¹⁹F-NMR analysis.

The adhesive functional group is preferably at least one selected from the group consisting of a carbonyl group, a hydroxy group, a heterocyclic group, and an amino group.

The fluororesin may have an adhesive functional group introduced into a side chain and/or an end of the main chain of the polymer.

In order to achieve easy introduction and to allow the fluororesin to have moderate heat resistance and good adhesion at relatively low temperatures, the adhesive functional group is preferably an amide group, a carbamoyl group, a hydroxy group, a carboxy group, a carbonate group, a carboxylic acid halide group, or an acid anhydride bond, more preferably an amide group, a carbamoyl group, a hydroxy group, a carbonate group, a carboxylic acid halide group, or an acid anhydride bond.

The fluororesin may be obtainable by any conventionally known polymerization method such as suspension polymerization, solution polymerization, emulsion polymerization, or bulk polymerization. In the polymerization, the conditions such as the temperature and the pressure, a polymerization initiator and other additives may appropriately be selected in accordance with the composition and amount of the fluororesin.

The fluororesin preferably has a melting point of 160-270°C, although not limited thereto. The melting point of the fluororesin is defined as the temperature corresponding to the maximum value on a heat-of-fusion curve obtained by increasing the temperature at a rate of 10°C/min using a DSC device (available from Seiko Instruments Inc.).

The fluororesin preferably has a molecular weight that allows the resulting laminate to exert characteristics such as good mechanical properties and low fuel permeability. For example, with the melt flow rate (MFR) taken as an indicator of the molecular weight, the MFR is preferably 0.5-100 g/10 min at any temperature within the range of about 230-350°C, which is a common molding temperature range for fluororesins. The MFR is more preferably 1-50 g/10 min, still more preferably 2-35 g/10 min. For example, for the fluororesin that is PCTFE, a CTFE copolymer, or a TFE/HFP/VdF copolymer, the MFR is measured at 297°C.

The MFR can be specified by determining the mass (g) of the polymer that flows out of a nozzle having a diameter of 2 mm and a length of 8 mm per unit time (10 minutes) at 297°C under a load of 5 kg, for example, using a melt indexer (available from Toyo Seiki Seisaku-sho, Ltd.).

The fluororesin layer (A) may contain one or two or more of the fluororesins.

The fluororesin can lead to better chemical resistance and lower fuel permeability when it is a perhalo polymer. The perhalo polymer is a polymer in which every carbon atom constituting the main chain of the polymer is coupled with a halogen atom.

The fluororesin layer (A) may further contain any of various fillers such as inorganic powder, glass fiber, carbon powder, carbon fiber, and metal oxides in accordance with the purpose and application thereof to the extent that does not impair the performance thereof.

For example, in order to further reduce the fuel permeability, any of smectite-type lamellar viscous minerals such as montmorillonite, beidellite, saponite, nontronite, hectorite, sauconite, and stevensite and fine lamellar minerals having a high aspect ratio such as mica may be added.

In order to impart conductivity, a conductive filler may be added. Examples of the conductive filler include, but are not limited to, powder or fiber of conductive simple substance such as metal or carbon; powder of a conductive compound such as zinc oxide; and powder whose surface has undergone conductivity-imparting treatment. In the case of adding a conductive filler, the filler is preferably melt-kneaded into pellets in advance.

Examples of the powder or fiber of conductive simple substance include, but are not limited to, powder of metal such as copper or nickel; fiber of metal such as iron or stainless steel; and carbon black, carbon fiber, and carbon fibril disclosed in JP H03-174018 A.

The powder whose surface has undergone conductivity-imparting treatment is powder obtainable by subjecting the surface of non-conductive powder such as glass beads or titanium oxide to conductivity-imparting treatment.

Examples of the conductivity-imparting treatment on the surface include, but are not limited to, metal sputtering and electroless plating.

Carbon black is suitably used among the above conductive fillers because it is advantageous to economic efficiency and prevention of storage of static electricity.

The fluororesin composition containing a conductive filler preferably has a volume resistivity of 1 × 10⁰ to 1 × 10⁹ Ω·cm. The lower limit thereof is more preferably 1 × 10² Ω·cm, while the upper limit thereof is more preferably 1 × 10⁸ Ω·cm.

In addition to the filler, any other appropriate additives such as a thermal stabilizer, a reinforcing agent, an ultraviolet absorber, and a pigment may be added.

The fluorine-free resin layer (B) contains a fluorine-free resin. The fluorine-free resin has a SP value of 11.5-13.5 (cal/cm³)^{1/2} and a fuel permeability coefficient of 1.0 g·mm/m²/day or lower.

The SP value is preferably 11.7-13.3 (cal/cm³)^{1/2}, more preferably 12.0-13.0 (cal/cm³)^{1/2}, still more preferably 12.1-12.6 (cal/cm³)^{1/2}.

The SP value can be determined by the Fedors' equation (Polym. Eng. Sci., 14[2], 147(1974)).

The fuel permeability coefficient is preferably 0.8 g·mm/m²/day or lower, more preferably 0.6 g·mm/m²/day or lower, still more preferably 0.4 g·mm/m²/day or lower.

The fuel permeability coefficient is a value calculated from the mass change determined as follows. Specifically, a SUS316 fuel permeability coefficient measurement cup having an inner diameter of 40 mmø and a height of 20 mm is charged with 18 mL of an isooctane-toluene-ethanol solvent mixture in which isooctane, toluene, and ethanol are mixed at a ratio by volume of 45:45:10; a fluorine-free resin sheet (diameter: 45 mm, thickness: 120 µm) is prepared from the measurement target resin by the following method and is put into the measurement cup; and then the mass change is determined at 60°C.

### (Method for producing fluorine-free resin sheet)

Resin pellets were put into a mold having a diameter of 120 mm. The workpiece was mounted on a press heated up to 300°C and the pellets were melt-pressed at a pressure of about 2.9 MPa, whereby a fluorine-free resin sheet having a thickness of 0.12 mm was obtained. This sheet was then processed to have a diameter of 45 mm and a thickness of 120 µm.

Examples of the fluorine-free resin include polyvinyl alcohol polymers (10.6 to 14.1), polyamides (9.9 to 11.6) such as nylon-6, nylon 66, nylon 11, nylon 12, and nylon 9T, polyacrylonitrile (13.1), polyvinylidene chloride (10.4), polyethylene terephthalate (11.3), polyethylene (7.7 to 8.4), and PPS (19.8). The SP values in the parentheses are the SP values of homopolymers, expressed in the unit (cal/cm³)^{1/2}. Although some of these fluorine-free resins have a SP value out of the range of 11.5-13.5 (cal/cm³)^{1/2}, the SP value can be adjusted to the range of 11.5-13.5 (cal/cm³)^{1/2} by copolymerization with other monomers. Preferred among the fluorine-free resins are polyvinyl alcohol polymers because they have excellent fuel permeation resistance.

Polyvinyl alcohol polymers are obtainable by saponifying a vinyl ester homopolymer or a copolymer of a vinyl ester and another monomer (particularly a copolymer of a vinyl ester and ethylene) using an alkali catalyst, for example. A typical compound used as the vinyl ester is vinyl acetate. Other fatty acid vinyl esters (e.g., vinyl propionate and vinyl pivalate) may also be used.

The vinyl ester component of the polyvinyl alcohol polymer preferably has a degree of saponification of 90 mol% or higher, more preferably 95 mol% or higher, still more preferably 96 mol% or higher. A polyvinyl alcohol polymer having a degree of saponification of lower than 90 mol% may have low fuel permeation resistance. A polyvinyl alcohol polymer that is an ethylene/vinyl alcohol copolymer

(EVOH) and has a degree of saponification of lower than 90 mol% may have insufficient thermal stability, so that the resulting molded article may be likely to contain gels and blisters.

For the polyvinyl alcohol polymer that contains a mixture of two or more polyvinyl alcohol polymers having different degrees of saponification, the average calculated from the mixing ratio by mass is taken as the degree of saponification of the mixture.

Preferred among the above polyvinyl alcohol polymers are ethylene/vinyl alcohol copolymers (EVOH) because they are melt-moldable and have good fuel permeation resistance.

The EVOH preferably has an ethylene content of 5-60 mol%. An EVOH having an ethylene content of less than 5 mol% may have low fuel permeation resistance and poor melt moldability. The ethylene content of the EVOH is preferably 10 mol% or more, more preferably 15 mol% or more, most preferably 20 mol% or more. An EVOH having an ethylene content of more than 60 mol% may have insufficient fuel permeation resistance. The ethylene content is preferably 55 mol% or less, more preferably 50 mol% or less.

An EVOH used suitably has, as described above, an ethylene content of 5-60 mol% and a degree of saponification of 90 mol% or higher. In order to achieve excellent impact peel resistance, preferred is to use an EVOH having an ethylene content of 25-55 mol% and a degree of saponification of 90 to < 99 mol%.

For the EVOH that contains a mixture of two or more EVOHs having different ethylene contents, the average calculated from the mixing ratio by mass is taken as the ethylene content of the mixture. In this case, EVOHs having the greatest difference in ethylene content preferably have a difference in ethylene content of 30 mol% or less and a difference in degree of saponification of 10 mol% or less. A mixture that fails to meet these conditions may impair the transparency of the resulting crosslinked product. The difference in ethylene content is more preferably 20 mol% or less, still more preferably 15 mol% or less. The difference in degree of saponification is more preferably 7 mol% or less, still more preferably 5 mol% or less. For the multilayer structure that is molded from the crosslinked product of the crosslinkable composition and is desired to have impact peel resistance and gas barrier properties balanced at a higher level, preferred is to mix an EVOH (b'1) having an ethylene content of 25-55 mol% and a degree of saponification of 90 to < 99 mol% and an EVOH (b'2) having an ethylene content of 25 mol% or more and 55 mol% or less and a degree of saponification of 99 mol% or more at a mixing ratio by mass (b'1)/(b'2) of (5/95)-(95/5).

The ethylene content and degree of saponification of the EVOH can be determined by nuclear magnetic resonance (NMR) analysis.

The EVOH may contain, as a copolymerized unit, a small amount of a monomer unit other than the ethylene unit and the vinyl alcohol unit to the extent that does not inhibit the purposes of the invention. Examples of such a monomer include the following compounds: α-olefins such as propylene, 1-butene, isobutene, 4-methyl-1-pentene, 1-hexene, and 1-octene; unsaturated carboxylic acids such as itaconic acid, methacrylic acid, acrylic acid, and maleic acid, salts, partial or complete esters, nitriles, amides, and anhydrides thereof; vinylsilane compounds such as vinyltrimethoxysilane, vinyltriethoxysilane, vinyltri(β-methoxyethoxy)silane, and γ-methacryloxypropyltrimethoxysilane; unsaturated sulfonic acids and salts thereof; unsaturated thiols; and vinylpyrrolidones.

It is also preferred to modify the EVOH by a conventionally known method to impart flexibility to the EVOH. Even if the modification to impart flexibility slightly reduces the fuel permeation resistance, the oxygen transmission rate can be adjusted by adjusting the production method of the EVOH.

The EVOH preferably has a SP value of 11.7-13.3 (cal/cm³)^{1/2}, more preferably 12.0-13.0 (cal/cm³)^{1/2}, still more preferably 12.1-12.6 (cal/cm³)^{1/2}. The EVOH having a SP value within the above range can lead to good fuel permeation resistance.

The EVOH preferably has a melt flow rate (MFR) (210°C, under a load of 2160 g, in accordance with JIS K7210) of 0.1-100 g/10 min, more preferably 0.5-50 g/10 min, still more preferably 1-30 g/10 min.

The fluorine-free resin may contain any of various additives such as stabilizers, e.g., thermal stabilizers, reinforcing agents, fillers, ultraviolet absorbers, and pigments to the extent that does not inhibit the purposes of the invention. These additives can improve the properties of the fluorine-free resin such as thermal stability, surface hardness, abrasion resistance, charge ability, and weather resistance.

The second laminate of the invention preferably further contains a resin layer (C).

The resin constituting the resin layer (C) is one that has excellent mechanical strength and can mainly function to maintain the pressure resistance and the shape of the molded article. Examples of the resin include polyamide resins, polyolefin resins, vinyl chloride resins, polyurethanes resins, polyester resins, polyaramid resins, polyimide resins, polyamideimide resins, polyphenyleneoxide resins, polyacetal resins, polycarbonate resins, acrylic resins, styrene resins, acrylonitrile/butadiene/styrene resins (ABS), cellulose resins, polyetheretherketone resins (PEEK), polysulfone resins, polyethersulfone resins (PES), polyetherimide resins, and polyethylene. The presence of the resin layer (C) allows the second laminate of the invention to have excellent mechanical strength.

In particular, the resin constituting the resin layer (C) is preferably at least one selected from the group consisting of a polyamide resin, a polyolefin resin, and polyethylene.

The polyamide resin contains a polymer having an amide bond (-NH-C(=O)-) as a repeating unit in the molecule.

The polyamide resin may be what is called a nylon resin, which contains a polymer in which the amide bonds in the molecule are attached to aliphatic or alicyclic structures, or may be what is called an aramid resin, which contains a polymer in which the amide bonds in the molecule are attached to aromatic structures.

Examples of the nylon resin include, but are not limited to, those containing any of polymers such as nylon 6, nylon 66, nylon 11, nylon 12, nylon 610, nylon 612, nylon 6/66, nylon 66/12, nylon 46, nylon 6T, nylon 9T, nylon 10T, and metaxylylenediamine/adipic acid copolymers. Two or more of these may be used in combination.

Examples of the aramid resin include, but are not limited to, polyparaphenylene terephthalamide and polymetaphenylene isophthalamide.

The polyamide resin may contain a polymer in which an amide bond-free structure as a repeating unit is block-copolymerized or graft-copolymerized with part of the molecule. Examples of such a polyamide resin include those containing any of polyamide elastomers such as nylon 6/polyester copolymers, nylon 6/polyether copolymers, nylon 12/polyester copolymers, and nylon 12/polyether copolymers. These polyamide elastomers are obtainable by block copolymerization of a nylon oligomer and a polyester oligomer via an ester bond, or block copolymerization of a nylon oligomer and a polyether oligomer via an ether bond. Examples of the polyester oligomer include polycaprolactone and polyethylene adipate. Examples of the polyether oligomer include polyethylene glycol, polypropylene glycol, and polytetramethylene glycol. Preferred polyamide elastomers are nylon 6/polytetramethylene glycol copolymers and nylon 12/polytetramethylene glycol copolymers.

In order to achieve sufficient mechanical strength even when the polyamide resin layer is thin, the polyamide resin is particularly preferably nylon 6, nylon 66, nylon 11, nylon 12, nylon 610, nylon 612, nylon 6/66, nylon 66/12, a nylon 6/polyester copolymer, a nylon 6/polyether copolymer, a nylon 12/polyester copolymer, a nylon 12/polyether copolymer. Two or more of these may be used in combination.

The polyolefin resin is a resin containing a monomer unit derived from a vinyl group-containing monomer free of a fluorine atom. Any vinyl group-containing monomer free of a fluorine atom may be used, and preferred in applications that require interlayer adhesion are those having a polar functional group described above.

Examples of the polyolefin resin include, but are not limited to, polyolefins such as polyethylene, polypropylene, and high density polyolefins, as well as modified polyolefins obtained by modifying the polyolefins with, for example, maleic anhydride, epoxy-modified polyolefins, and amine-modified polyolefins.

The resin constituting the resin layer (C) may contain any of various additives such as stabilizers, e.g., thermal stabilizers, reinforcing agents, fillers, ultraviolet absorbers, and pigments to the extent that does not inhibit the purposes of the invention. These additives can improve the properties of the fluorine-free organic material such as thermal stability, surface hardness, abrasion resistance, charge ability, and weather resistance.

The polyamide resin preferably has an amine value of 10-80 (equivalents/10⁶ g). The polyamide resin having an amine value within the above range can provide excellent interlayer adhesion even in the case of coextrusion at a relatively low temperature. A polyamide resin having an amine value of less than 10 (equivalents/10⁶ g) may cause insufficient interlayer adhesion. A polyamide resin having an amine value of more than 80 (equivalents/10⁶ g) may cause the resulting laminate to have insufficient mechanical strength, to be more susceptible to discoloration during storage, and to exhibit poor handleability. The lower limit of the amine value is preferably 15 (equivalents/10⁶ g), more preferably 20 (equivalents/10⁶ g), still more preferably 23 (equivalents/10⁶ g). The upper limit thereof is preferably 60 (equivalents/10⁶ g), more preferably 50 (equivalents/10⁶ g).

The amine value herein is a value determined by dissolving 1 g of the polyamide resin in 50 mL of m-cresol under heat and titrating the solution using a 1/10 normal aqueous p-toluenesulfonic acid solution with Thymol Blue as an indicator. The amine value herein means the amine value of the polyamide resin before lamination unless otherwise specified. Although some of the amino groups contained in the polyamide resin before lamination are considered to be consumed for adhesion with an adjacent layer, the number of such amino groups is very small relative to the entire layer. Thus, the amine value of the polyamide resin before lamination and the amine value in the second laminate of the invention are substantially the same.

The second laminate of the invention preferably further includes an adhesive layer (S). The presence of the adhesive layer (S) can improve the interlayer adhesion.

Typical examples of the resin constituting the adhesive layer (S) include TFE/Et/HFP copolymers containing an adhesive functional group, functional group-modified polyethylene, and high amine value nylons. The resin may be appropriately selected according to the physical properties of two layers to be bonded. Preferred among these are polypropylene, polyethylene, and high amine value nylon.

The resin constituting the adhesive layer (S) has an amine value of 10-80 (equivalents/10⁶ g). The resin having an amine value within the above range can provide excellent interlayer adhesion even in the case of coextrusion at a relatively low temperature. A resin having an amine value of less than 10 (equivalents/10⁶ g) may cause insufficient interlayer adhesion. A resin having an amine value of more than 80 (equivalents/10⁶ g) may cause the resulting laminate to have insufficient mechanical strength, to be more susceptible to discoloration during storage, and to exhibit poor handleability. The lower limit of the amine value is preferably 15 (equivalents/10⁶ g), more preferably 20 (equivalents/10⁶ g), still more preferably 23 (equivalents/10⁶ g). The upper limit thereof is preferably 60 (equivalents/10⁶ g).

The second laminate of the invention preferably has a fuel permeability coefficient of 0.05 g·mm/m²/day or lower.

The second laminate of the invention having a fuel permeability coefficient within the above range can have high fuel permeation resistance. The lower limit of the fuel permeability coefficient may be, for example, 0.001 g·mm/m²/day as long as the fuel permeability coefficient is within the above range. The upper limit of the fuel permeability coefficient is more preferably 0.04 g ·mm/m²/day, still more preferably 0.03 g·mm/m²/day, most preferably 0.02 g·mm/m²/day, particularly preferably 0.015 g·mm/m²/day.

The fuel permeability coefficient herein is a value calculated from the mass change determined as follows. Specifically, a fuel permeability coefficient measurement cup is charged with an isooctane-toluene-ethanol solvent mixture (CE10) in which isooctane, toluene, and ethanol are mixed at a ratio by volume of 45:45:10; the laminate as the measurement target is put into the measurement cup; and then the mass change is determined at 60°C.

Examples of preferred laminated structures for a two-layer laminate include: layer (A)/layer (B); and layer (B)/layer (A), each from the liquid-contact side.

A layer (A)/layer (B) laminated structure is preferred among these as a tube for fuel. It can also be used as a brake hose when a metal blade is attached thereto.

Examples of preferred laminated structures for a three-layer laminate include: layer (A)/layer (B)/layer (C); layer (A)/layer (S)/layer (B); layer (B)/layer (A)/layer (C) ; and layer (B)/layer (S) /layer (A).

A layer (A)/layer (B)/layer (C) laminated structure and a layer (A)/layer (S)/layer (B) laminated structure are preferred among these as tubes for fuel and liquid chemical tubes that require chemical resistance.

Examples of preferred laminated structures for a four-layer laminate include: layer (A)/layer (S)/layer (B)/layer (C); layer (A)/layer (B)/layer (S)/layer (C); layer (B)/layer (S)/layer (A)/layer (C); and layer (B)/layer (A)/layer (S)/layer (C).

Laminates having any of these four-layer structures are preferred as tubes for fuel and liquid chemical tubes. More preferred among these is a layer (A)/layer (S)/layer (B)/layer (C) laminated structure.

Examples of preferred laminated structures for a five-layer laminate include: layer (A)/layer (S)/layer (B)/layer (S)/layer (C); and layer (B)/layer (S)/layer (A)/layer(S)/layer(C).

Examples of preferred laminated structures for a six-layer laminate include: layer (A)/layer (S)/layer (S)/layer (B)/layer(S)/layer(C).

A layer (A)/layer (S)/layer (B)/layer (C) laminated structure, a layer (A)/layer (S)/layer (B)/layer (S)/layer (C) laminated structure, and a layer (A)/layer (S)/layer (S)/layer (B)/layer (S)/layer (C) laminated structure are preferred as tubes for fuel and liquid chemical tubes.

Each of the layer (A), layer (B), layer (C), and layer (S) may be a single layer or a layer having a multilayer structure including two or more layers.

The second laminate of the invention may include a different layer other than the layer (A), layer (B), layer (C), and layer (S). Examples of such a different layer include protecting layers, colored layers, marking layers, and dielectric layers for static protection in the laminate. A layer such as a protecting layer or a dielectric layer is preferably an outermost layer of the laminate considering their functions.

The second laminate of the invention is a laminate including the layer (A) containing a fluororesin and the layer (B) containing a fluorine-free resin.

Each of the layer (A) and layer (B) in the laminate may be a single layer or a layer having a multilayer structure including two or more layers.

The second laminate of the invention includes the layer (A) and the layer (B) and may further include a different layer. An example of such a different layer is a layer that is made of elastomer, for example, and that protects the laminate from vibrations or shocks and imparts flexibility. The elastomer may be a thermoplastic elastomer, and may be at least one selected from the group consisting of a polyamide elastomer, a polyurethane elastomer, a polyester elastomer, a polyolefin elastomer, a styrene/butadiene elastomer, and a vinyl chloride elastomer.

The second laminate of the invention is preferably a laminate including the resin layer (C) in addition to the layer (A) containing a fluororesin and the layer (B) containing a fluorine-free resin.

The second laminate of the invention may include the adhesive layer (S) between the layer (A) and the layer (B).

The second laminate of the invention may be, for example, a laminate including the layer (A) and the layer (B) laminated in this order, a laminate including the layer (A), the layer (B), and the layer (C) laminated in this order, or a laminate including the layer (A), the layer (S), the layer (B), and the layer (C) laminated in this order.

Each of the layer (A), layer (B), layer (C), and layer (S) may be a single layer or a layer having a multilayer structure including two or more layers.

The layer (A) having a multilayer structure including two or more layers may include a layer containing a fluorine-containing ethylenic polymer mixed with the aforementioned conductive filler and a layer containing a fluorine-containing ethylenic polymer free of conductive filler.

For the second laminate of the invention including the adhesive layer (S) between the layer (A) and the layer (B), the adhesive layer (S) is preferably in contact with the layer (A) and the layer (B). For the second laminate of the invention including the layer (C), the layer (C) is preferably in contact with the layer (B).

The second laminate of the invention may not necessarily have a clear boundary between the layers in contact with each other; it may have a layered structure in which the molecular chains of the polymers constituting the layers penetrate into the opposite layers through the contact surface therebetween and a concentration gradient is thereby formed.

The second laminate of the invention may be formed by, for example, a method (1) including coextrusion-molding the layers constituting the laminate in a molten state and hotmelt-bonding (fusion-bonding) the layers to form a multilayer laminate in one step (coextrusion molding).

In addition to the method (1), examples of the method for forming the second laminate of the invention include: a method (2) including preparing each layer separately with an extruder and stacking and bonding the layers together by hot melt bonding; a method (3) including preparing a layer in advance and extruding a molten resin onto a surface of the layer, thereby forming a laminate; and a method (4) including preparing a layer in advance, electrostatically applying, to a surface of the layer, a polymer that is to constitute a different layer to be adjacent to the layer prepared in advance, and then heating the resulting coated article as a whole or from the coated side to melt the coating polymer under heat and form the different layer.

For the second laminate of the invention that is in the form of a tube or hose, an exemplary method corresponding to the method (2) is a method (2a) including forming each tubular layer separately with an extruder and coating a layer that serves as an inner layer with a layer that is to contact the inner layer using a heat-shrinkable tube. An exemplary method corresponding to the method (3) is a method (3a) including forming a layer that serves as an inner layer using an inner layer extruder and then forming, on the periphery of the layer, a layer that is to contact the inner layer using an outer layer extruder. An exemplary method corresponding to the method (4) is a method (4a) including electrostatically applying a polymer that is to constitute an inner layer to the inside of a layer that is to contact the inner layer, and then heating the resulting coated article as a whole in a heating oven or heating it from the inside with a bar-shape heating device inserted therein to melt and mold the polymer that is to constitute the inner layer under heat.

The second laminate of the invention in which the layers constituting it are coextrudable ones is usually formed by the coextrusion molding of the method (1). Examples of the coextrusion molding include conventionally known multilayer extrusion production methods such as a multi-manifold method and a feed block method.

In the molding methods (2) and (3), each layer formed may be subjected to surface treatment on the contact surface of each layer with another layer so as to enhance the interlayer adhesion. Examples of the surface treatment include: etching treatment such as sodium etching treatment; corona treatment; and plasma treatment such as low temperature plasma treatment.

Preferred molding methods are the method (1) and also the methods (2) and (3) in which the layers are surface-treated before lamination. The method (1) is most preferred.

Another possible method for molding the second laminate of the invention is to laminate layers of multiple materials in multiple steps by rotation molding. In such a case, the material of the outer layer may not necessarily have a melting point higher than that of the material of the inner layer, and the melting point of the material of the inner layer may be higher than that of the outer layer by 100°C or more. In this case, the inside is also preferably provided with a heating unit.

The second laminate of the invention may have any of various forms, such as a film form, a sheet form, a tube form, a hose form, a bottle form, and a tank form. The film, sheet, tube, and hose forms may be wave-patterned, corrugated, or convoluted.

For the second laminate of the invention that is in the form of a tube or hose having a region where multiple folds are disposed in a wave pattern in a circular shape, it is compressed at one portion of the circular shape while it is extended at another portion of the circular shape within the region, so that the tube or hose can be easily bent at any angle without stress fatigue or delamination.

The wave-patterned region may be formed by any method. For example, it can easily be formed by preparing a linear tube and then giving a predetermined shape such as a wave shape to the tube by in-mold decoration.

The laminate of the invention has very low fuel permeability and is excellent in heat resistance, oil resistance, fuel oil resistance, antifreeze resistance, and steam resistance. The laminate can sufficiently withstand use under severe conditions and can be used in various applications.

The second laminate of the invention can be used in the following applications.

For example, the laminate has properties suitable for seals such as gaskets, non-contact or contact packings (e.g., self-seal packings, piston rings, split ring packings, mechanical seals, oil seals), bellows, diaphragms, hoses, tubes, electric wires, films, sheets, bottles, containers, and tanks which are required to have heat resistance, oil resistance, fuel oil resistance, antifreeze resistance, and steam resistance, of engine bodies, main drive systems, valve train systems, lubrication and cooling systems, fuel systems, and intake and exhaust systems of automobile engines, transmission systems of driveline systems, steering systems and braking systems of chassis, and basic electrical parts of electrical equipment, electrical parts of control systems, and electrical equipment accessories.

The laminate can be used for films and sheets including films for food, sheets for food, films for chemicals, sheets for chemicals, diaphragms and packings of diaphragm pumps,
tubes and hoses including tubes for fuel and hoses for fuel such as tubes for automobile fuel and hoses for automobile fuel, tubes for solvent and hoses for solvent, tubes for coating materials and hoses for coating materials (including those for printers), radiator hoses, air conditioner hoses, and brake hoses of automobiles, electric wire coating materials, tubes for food and beverage and hoses for food and beverage, underground tubes and hoses for gas stations, and tubes and hoses for offshore oil fields (including injection tubes and crude oil transport tubes),
bottles, containers, and tanks including radiator tanks of automobiles, fuel tanks such as gasoline tanks, solvent tanks, tanks for coating materials, chemical containers such as containers for chemicals for semiconductors, and tanks for food and beverage, and
other applications including seals for automobiles such as flange gaskets of carburetors and O-rings of fuel pumps, machine-related seals such as seals of hydraulic machines, gears, medical tubes (including catheters), and tubes for cableways.

Specific examples include gaskets such as cylinder head gaskets, cylinder head cover gaskets, sump packings, and general gaskets, seals such as O-rings, packings, and timing belt cover gaskets, and hoses such as control hoses, of engine bodies, anti-vibration sheets of engine mounts, and sealants for high-pressure valves in hydrogen storage systems;
shaft seals such as crankshaft seals and camshaft seals of main drive systems;
valve stem seals such as engine valves of valve train systems;
engine oil cooler hoses of engine oil coolers, oil return hoses, seal gaskets, water hoses used around radiators, and vacuum pump oil hoses of vacuum pumps, of lubrication and cooling systems;
oil seals, diaphragms, and valves of fuel pumps, fuel hoses such as filler (neck) hoses, fuel supply hoses, fuel return hoses, and vapor (evaporator) hoses, in-tank hoses, filler seals, tank packings, and in-tank fuel pump mounts of fuel tanks, tube bodies and connector O-rings of fuel pipe tubes, injector cushion rings, injector seal rings, injector O-rings, pressure regulator diaphragms, and check valves of fuel injection systems, needle valve petals, accelerator pump pistons, flange gaskets, and control hoses of carburetors, and valve seats and diaphragms of combined air controlling (CAC) systems in fuel systems;
intake manifold packings and exhaust manifold packings of manifolds, diaphragms, control hoses, and emission control hoses of exhaust gas recirculation (EGR) systems, diaphragms of BPT, after burn preventive valve seats of AB valves, throttle body packings of throttles, turbo oil hoses (supply), turbo oil hoses (return), turbo air hoses, intercooler hoses, and turbine shaft seals of turbochargers, of intake and exhaust systems;
transmission-related bearing seals, oil seals, **O-**rings, packings, and torque converter hoses, and gear oil hoses, ATF hoses, O-rings, and packings of ATs, of transmission systems;
power steering oil hoses of steering systems;
oil seals, O-rings, packings, brake fluid hoses, air valves, vacuum valves, and diaphragms of vacuum servos, piston cups of master cylinders, caliper seals, and boots, of braking systems;
insulators and sheaths of electric wires (harnesses), and tubes of harness-holding parts of basic electrical parts;
cover materials for sensor lines of control system electrical parts; and
O-rings, packings, and air conditioner hoses of electrical equipment accessories, and wiper blades of exterior parts.

In addition to the field of automobiles, for example, the laminate of the invention can be suitably used in the following applications: oil-resistant, chemical-resistant, heat-resistant, steam-resistant, or weather-resistant packings, O-rings, hoses, other sealants, diaphragms, and valves in a means of transportation, such as shipment and aircraft; similar packings, O-rings, sealants, diaphragms, valves, hoses, rolls, tubes, chemical-resistant coatings, and linings in chemical plants; similar packings, O-rings, hoses, sealants, belts, diaphragms, valves, rolls, and tubes in food plant equipment and food-related devices (including household utensils); similar packings, O-rings, hoses, sealants, diaphragms, valves, and tubes in nuclear power plant equipment; similar packings, O-rings, hoses, sealants, diaphragms, valves, rolls, tubes, linings, mandrels, electric wires, expansion joints, belts, and weather strips in general industrial parts; and roll blades of plain paper copiers.

The laminate can be suitably used for food-related sealants, sealants for medical and chemical applications, and O-rings, packings, and sealants in general industrial fields. In particular, the laminate can be suitably used for packing of lithium ion batteries because the laminate maintains the chemical resistance and the sealability simultaneously. Further, the laminate can be suitably used in applications requiring slidability with low friction.

Specific examples of medical molded articles to which the laminate of the invention is applicable include: drug closures, bottle cap seals, can seals, medicinal tapes, medicinal pads, syringe packings, bases for percutaneous absorption drugs, teats of baby bottles, medical bags, catheters, infusion sets, coinjection tubes, cap liners, caps of vacuum blood collection tubes, cyringe gaskets, infusion tubes, gaskets and caps of medical equipment, syringe tips, grommets, caps of blood collection tubes, cap seals, packings, O-rings, sheath introducers, dilator, guiding sheaths, blood circuits, cardiopulmonary bypass circuits, tubes for rotablators, catheter needles, infusion sets, infusion tubes, needleless infusion systems, infusion bags, blood bags, blood component separation bags, tubes for blood component separation bags, artificial blood vessels, arterial cannulae, stents, protective tubes for endoscope treatment devices, scope tubes for endoscopes, top overtubes for endoscopes, guiding tubes for pharyngeal transit, tubes for coronary artery bypass graft surgery, ileus tubes, tubes for percutaneous transhepatic biliary drainage, outer tubes for electrosurgical knives, outer tubes for ultrasonic scalpels, outer tubes for dissecting forceps, and bags for cell culture.

The second laminate of the invention can be suitably used in applications that involve contact with flammable liquid, such as tubes, hoses, and tanks. In such a case, the portion that is to contact liquid is preferably the layer (A). The portion that is to contact liquid is usually the inner layer. Thus, when the layer (A) is the inner layer, the layer (B) is the outer layer. The "inner layer" and the "outer layer" herein only describe which of the layer (A) and layer (B) is located on the inner side or the outer side, or that the layer is located between these two layers, in a shape involving the concept of the inside and outside, such as a tube, hose, or tank shape. The laminate may include a different layer on a surface of the layer (A) opposite to the surface in contact with the layer (B), between the layer (A) and the layer (B), and/or a surface of the layer (B) opposite to the surface in contact with the layer (A).

For the second laminate of the invention that is to contact flammable liquid such as gasoline, the contact with flammable liquid tends to cause accumulation of static electricity. To avoid ignition due to the static electricity, the layer that is to contact liquid preferably contains a conductive filler.

The laminate which is a tube for fuel is encompassed by the second laminate of the invention.

As described above, the second laminate of the invention has excellent fuel permeation resistance and thus can be suitably used as a laminate for fuel tubes that is used for tubes for fuel.

The second laminate of the invention may have any preferred layer structure. Examples of structures particularly preferred as tubes for fuel include:
a laminate including
   layer 1: a layer containing a CTFE copolymer and
   layer 2: a layer containing an ethylene/vinyl alcohol copolymer;
a laminate including
   layer 1: a layer containing a CTFE copolymer,
   layer 2: a layer containing a polyamide resin, and
   layer 3: a layer containing an ethylene/vinyl alcohol copolymer;
a laminate including
   layer 1: a layer containing a CTFE copolymer,
   layer 2: a layer containing an ethylene/vinyl alcohol copolymer, and
   layer 3: a layer containing a polyamide resin;
a laminate including
   layer 1: a layer containing a CTFE copolymer,
   layer 2: a layer containing a polyamide resin,
   layer 3: a layer containing an ethylene/vinyl alcohol copolymer, and
   layer 4: a layer containing a polyamide resin;
a laminate including
   layer 1: a layer containing a CTFE copolymer,
   layer 2: a layer containing a polyamide resin,
   layer 3: a layer containing an ethylene/vinyl alcohol copolymer, and
   layer 4: a layer containing a polyethylene resin;
a laminate including
   layer 1: a layer containing a CTFE copolymer,
   layer 2: a layer containing a polyamide resin,
   layer 3: a layer containing an ethylene/vinyl alcohol copolymer,
   layer 4: a layer containing a polyamide resin, and
   layer 5: a layer containing a polyamide resin;
a laminate including
   layer 1: a layer containing a CTFE copolymer,
   layer 2: a layer containing a polyamide resin,
   layer 3: a layer containing an ethylene/vinyl alcohol copolymer,
   layer 4: a layer containing a polyamide resin, and
   layer 5: a layer containing a polyethylene resin;
a laminate including
   layer 1: a layer containing a CTFE copolymer,
   layer 2: a layer containing a polyamide resin,
   layer 3: a layer containing a polyamide resin,
   layer 4: a layer containing an ethylene/vinyl alcohol copolymer,
   layer 5: a layer containing a polyamide resin, and
   layer 6: a layer containing a polyamide resin, and
a laminate including
   layer 1: a layer containing a CTFE copolymer,
   layer 2: a layer containing a polyamide resin,
   layer 3: a layer containing a polyamide resin,
   layer 4: a layer containing an ethylene/vinyl alcohol copolymer,
   layer 5: a layer containing a polyamide resin, and layer 6: a layer containing a polyethylene resin.

The layers of the above laminates for fuel tubes are laminated in the order of the numbers of the layers. The layer 1 is preferably the innermost layer.

### EXAMPLES

The invention is described in more detail hereinbelow with reference to examples. The invention is not intended to be limited by these examples.

### Synthesis Example 1 (Production of pellets of fluororesin (1))

A fluororesin (1) (TFE/CTFE/PPVE = 76.5/21.0/2.5 (mol%)) and carbon were melt-kneaded using ϕ50-mm single-screw extruder to give pellets. The obtained pellet-form CTFE copolymer was then heated at 190°C for 24 hours.

### Synthesis Example 2 (Production of pellets of fluororesin (2))

A fluororesin (2) (TFE/ethylene/HFP/CH₂=CF-CF₂-CF₂H = 45.0/45.0/9.5/0.5 (mol%)) and carbon were melt-kneaded using a ϕ50-mm single-screw extruder to give pellets. The obtained pellet-form EFEP copolymer was then heated at 150°C for 24 hours.

The copolymers obtained in the synthesis examples were evaluated for their physical properties as follows. Table 1 shows the results.

### (1) Measurement of composition of copolymer

The compositions of the copolymers of the synthesis examples were determined by ¹⁹F-NMR and elemental analysis of chlorine.

### (2) Measurement of melting point (Tm)

The melting peak with a temperature-increasing rate of 10°C/min was recorded using a differential scanning calorimeter (DSC) available from Seiko Instruments Inc.

The temperature corresponding to the local maximum was defined as the melting point (Tm).

### (3) Measurement of melt flow rate (MFR) of fluororesin

The mass (g) of the polymer that flowed out of a nozzle having an inner diameter of 2 mm and a length of 8 mm per unit time (10 minutes) was measured under a load of 5 kg using a melt indexer (available from Toyo Seiki Seisaku-Sho, Ltd.). The measurement temperature for the fluororesin (1) was 297°C, and the measurement temperature for the fluororesin (2) was 265°C.

### (4) Measurement of fuel permeability coefficient of single layer

Pellets of the copolymer for each layer of the laminate were put into a mold having a diameter of 120 mm. The workpiece was mounted on a press heated up to 280-300°C. The pellets were melt-pressed at a pressure of about 2.9 MPa, whereby a sheet having a thickness of 0.12 mm was obtained. This sheet was put into a SUS316 fuel permeability coefficient measurement cup having an inner diameter of 40 mmø and a height of 20 mm. Here, the cup contained 18 mL of CE10 (fuel prepared by mixing a mixture of isooctane and toluene at a ratio by volume of 50:50 and 10 vol% of ethanol). The mass change at 60°C was determined for 1000 hours. Table 1 shows the fuel permeability coefficient (g·mm/m²/day) calculated from the mass change per hour and the surface area and thickness of the sheet at the liquid-contact portion.

**[Table 1]**

| | Melting point | MFR | Fuel permeability coefficient |
|---|---|---|---|
| | °C | g/10 min | (g·mm/m²/day) |
| Synthesis Example 1 | 248 | 6.5 | 0.4 |
| Synthesis Example 2 | 195 | 4.5 | 6.5 |

### Example 1

A four-material four-layer tube extruder equipped with a multi-manifold die was used to feed the materials into four extruders (die/chip = 28 mmø/22 mmø) so as to give an outer layer of PA612 (product name: SX8002, available from Daicel-Evonik Ltd., amine value: 55 (equivalents/10⁶ g)), an intermediate layer of EVOH1 (product name: F101, available from Kuraray Co., Ltd., SP value: 12.3 (cal/cm³)^{1/2}, fuel permeability coefficient: 0.3 g·mm/m²/day), an adhesive layer of PA612 (product name: SX8002, available from Daicel-Evonik Ltd., amine value: 55 (equivalents/10⁶ g)), and an inner layer of the fluororesin (1) of Synthesis Example 1. The materials were molded into a multilayer tube having an outer diameter of 8 mm and an inner diameter of 6 mm under the extrusion conditions shown in Table 2. The fuel permeability coefficient of the obtained multilayer tube was measured by the method below. Table 2 shows the molding conditions and evaluation results.

### Comparative Example 1

A four-material four-layer tube extruder equipped with a multi-manifold die was used to feed the materials into four extruders (die/chip = 28 mmø/22 mmø) so as to give an outer layer of PA612 (product name: SX8002, available from Daicel-Evonik Ltd., amine value: 55 (equivalents/10⁶ g)), an intermediate layer of EVOH1 (product name: F101, available from Kuraray Co., Ltd., SP value: 12.3 (cal/cm³)^{1/2}, fuel permeability coefficient: 0.3 g·mm/m²/day), an adhesive layer of PA612 (product name: SX8002, available from Daicel-Evonik Ltd., amine value: 55 (equivalents/10⁶ g)), and an inner layer of the fluororesin (2) of Synthesis Example 2. The materials were molded into a multilayer tube having an outer diameter of 8 mm and an inner diameter of 6 mm under the extrusion conditions shown in Table 2. The fuel permeability coefficient of the obtained multilayer tube was measured by the method below. Table 2 shows the molding conditions and evaluation results.

### Comparative Example 2

A two-material two-layer tube extruder equipped with a multi-manifold die was used to feed the fluororesin (1) of Synthesis Example 1 into the inner two layers among the four extruders (die/chip = 28 mmø/22 mmø) and PA12 into the outer two layers so as to give an outer layer of PA12 (product name: Vestamid X7297, available from Degussa Huls AG) and an inner layer of the fluororesin (1) of Synthesis Example 1. The materials were molded into a multilayer tube having an outer diameter of 8 mm and an inner diameter of 6 mm under the extrusion conditions shown in Table 2. The fuel permeability coefficient of the obtained multilayer tube was measured by the method below. Table 2 shows the molding conditions and evaluation results.

### Comparative Example 3

A two-material two-layer tube extruder equipped with a multi-manifold die was used to feed the fluororesin (2) of Synthesis Example 2 into the inner two layers among the four extruders (die/chip = 28 mmø/22 mmø) and PA12 into the outer two layers so as to give an outer layer of PA12 (product name: Vestamid X7297, available from Degussa Huls AG) and an inner layer of the fluororesin (2) of Synthesis Example 2. The materials were molded into a multilayer tube having an outer diameter of 8 mm and an inner diameter of 6 mm under the extrusion conditions shown in Table 2. The fuel permeability coefficient of the obtained multilayer tube was measured by the method below. Table 2 shows the molding conditions and evaluation results.

### Comparative Example 4

A multilayer tube was molded in the same manner as in Example 1 except that EVOH1 (product name: F101, available from Kuraray Co., Ltd., SP value: 12.3 (cal/cm³)^{1/2}, fuel permeability coefficient: 0.3 g·mm/m²/day) for the intermediate layer was changed to EVOH2 (product name: E105B, available from Kuraray Co., Ltd., SP value: 11.0 (cal/cm³)^{1/2}, fuel permeability coefficient: 0.3 g·mm/m²/day).

The fuel permeability coefficient of the obtained multilayer tube was measured by the method below. Table 2 shows the molding conditions and evaluation results.

### Measurement of fuel permeability coefficient of laminate

The tubular laminate was cut to a length of 40 cm, whereby a tubular sample was prepared. CE10 (fuel prepared by mixing a mixture of isooctane and toluene at a ratio by volume of 50:50 and 10 vol% ethanol) was put in the tubular sample and both ends of the sample was sealed. The mass change at 60°C was determined for 1000 hours. Table 2 shows the fuel permeability coefficient (g·mm/m²/day) calculated from the mass change per hour and the surface area and thickness of the sample at the liquid-contact portion.

**[Table 2]**

| | | Example 1 | Comparative Example 1 | Comparative Example 2 | Comparative Example 3 | Comparative Example 4 |
|---|---|---|---|---|---|---|
| Inner layer | Material | Fluororesin (1) | Fluororesin (2) | Fluororesin (1) | Fluororesin (2) | Fluororesin (1) |
| | Screw rotation speed (rpm) | 7 | 7 | 6 | 7 | 7 |
| | Die temperature (°C) | 290 | 280 | 290 | 280 | 290 |
| | Material temperature (°C) | 285 | 276 | 284 | 277 | 285 |
| Adhesive layer | Material | PA612 | PA612 | | | PA612 |
| | Screw rotation speed (rpm) | 15 | 15 | | | 15 |
| | Die temperature (°C) | 290 | 280 | | | 290 |
| | Material temperature (°C) | 276 | 276 | | | 276 |
| Intermediate layer | Material | EVOH1 | EVOH1 | | | EVOH2 |
| | Screw rotation speed (rpm) | 17 | 17 | | | 17 |
| | Die temperature (°C) | 290 | 280 | | | 290 |
| | Material temperature (°C) | 245 | 245 | | | 245 |
| Outer layer | Material | PA612 | PA612 | PA12 | PA12 | PA612 |
| | Screw rotation speed (rpm) | 34 | 34 | 27 | 27 | 34 |
| | Die temperature (°C) | 290 | 280 | 290 | 280 | 290 |
| | Material temperature (°C) | 282 | 275 | 284 | 274 | 282 |
| Extrusion conditions | Line speed (m/min) | 8 | 8 | 8 | 8 | 8 |
| Thickness | Inner layer (mm) | 0.1 | 0.1 | 0.2 | 0.25 | 0.1 |
| | Adhesive layer (mm) | 0.15 | 0.15 | | | 0.15 |
| | Intermediate layer (mm) | 0.1 | 0.1 | | | 0.1 |
| | Outer layer (mm) | 0.65 | 0.65 | 0.8 | 0.75 | 0.65 |
| | Total thickness (mm) | 1 | 1 | 1 | 1 | 1 |
| Fuel permeability coefficient (g·mm/m²/day) | | 0.013 | 0.6 | 1.6 | 15 | 0.2 |

### INDUSTRIAL APPLICABILITY

The laminate of the invention can be suitably used for, for example, tubes for automobile fuel that require high fuel permeation resistance.

## Claims

1. A laminate comprising:
- a fluororesin layer (A) containing a fluororesin having a fuel permeability coefficient of ≤ 2.0 g·mm/m²/day;
- a fluorine-free resin layer (B) containing a fluorine-free resin having a SP value of 11.5-13.5 (cal/cm³)^{1/2} and a fuel permeability coefficient of ≤ 1.0 g·mm/m²/day; and
- an adhesive layer (S) containing a resin having an amine value of 10-80 (equivalents/10⁶ g) and being between the layer (A) and the layer (B),
wherein the fuel permeability coefficient, the SP value, and the amine value are measured as defined in the description.

2. The laminate of claim 1, wherein the fluororesin is a chlorotrifluoroethylene copolymer.

3. The laminate of claim 1 or 2, wherein the fluorine-free resin is an ethylene/vinyl alcohol copolymer.

4. The laminate of any of claims 1-3, which comprises a resin layer (C).

5. The laminate of any of claims 1-4, which is a tube for fuel.

6. The laminate of any of claims 1-5, which has a fuel permeability coefficient of ≤ 0.05 g·mm/m²/day.

## Patentansprüche

1. Laminat, umfassend:
- eine Fluorharzschicht (A), enthaltend ein Fluorharz mit einem Kraftstoffpermeationskoeffizienten von ≤ 2,0 g·mm/m²/Tag;
- eine fluorfreie Harzschicht (B), enthaltend ein fluorfreies Harz mit einem SP-Wert von 11,5-13,5 (cal/cm³)^{1/2} und einem Kraftstoffpermeationskoeffizienten von ≤ 1,0 g·mm/m²/Tag; und
- eine Haftvermittlerschicht (S), enthaltend ein Harz mit einer Aminzahl von 10-80 (Äquivalente/10⁶ g) und die zwischen der Schicht (A) und der Schicht (B) angeordnet ist,
wobei der Kraftstoffpermeationskoeffizient, der SP-Wert und die Aminzahl wie in der Beschreibung definiert gemessen werden.

2. Laminat nach Anspruch 1, wobei das Fluorharz ein Chlortrifluorethylen-Copolymer ist.

3. Laminat nach Anspruch 1 oder 2, wobei das fluorfreie Harz ein Ethylen/Vinylalkohol-Copolymer ist.

4. Laminat nach einem der Ansprüche 1-3, welches eine Harzschicht (C) umfasst.

5. Laminat nach einem der Ansprüche 1-4, welches ein Rohr für Kraftstoff ist.

6. Laminat nach einem der Ansprüche 1-5, welches einen Kraftstoffpermeationskoeffizienten von ≤ 0,05 g·mm/m²/Tag aufweist.

## Revendications

1. Stratifié comprenant :
- une couche de résine fluorée (A) contenant une résine fluorée présentant un coefficient de perméabilité au carburant de ≤ 2,0 g·mm/m²/jour ;
- une couche de résine non fluorée (B) contenant une résine non fluorée présentant une valeur SP de 11,5 à 13,5 (cal/cm³)^{1/2} et un coefficient de perméabilité au carburant de ≤ 1,0 g·mm/m²/jour ; et
- une couche adhésive (S) contenant une résine présentant une valeur d'amine de 10 à 80 (équivalents/10⁶ g) et étant située entre la couche (A) et la couche (B),
dans lequel le coefficient de perméabilité au carburant, la valeur SP et la valeur d'amine sont mesurés comme définis dans la description.

2. Stratifié selon la revendication 1, dans lequel la résine fluorée est un copolymère de chlorotrifluoroéthylène.

3. Stratifié selon la revendication 1 ou revendication 2, dans lequel la résine non fluorée est un copolymère d'éthylène/alcool vinylique.

4. Stratifié selon l'une quelconque des revendications 1 à 3, qui comprend une couche de résine (C).

5. Stratifié selon l'une quelconque des revendications 1 à 4, qui est un tube pour carburant.

6. Stratifié selon l'une quelconque des revendications 1 à 5, qui présente un coefficient de perméabilité au carburant de ≤ 0,05 g·mm/m²/jour.
